# EUROPEAN PATENT SPECIFICATION

(11) **EP 4 006 237 B1**
(45) Date of publication and mention of the grant of the patent: **18.03.2026**
(21) Application number: 20872668.7
(22) Date of filing: 30.09.2020
(51) Int. Cl.: E02F 9/02, E02F 9/24, E02F 9/26, B60T 7/12

(54) **WORK MACHINE AND CONTROL METHOD FOR WORK MACHINE**
ARBEITSMASCHINE UND STEUERVERFAHREN FÜR EINE ARBEITSMASCHINE
ENGIN DE CHANTIER ET PROCÉDÉ DE COMMANDE POUR ENGIN DE CHANTIER

(30) Priority: 30.09.2019 JP 2019180381
(43) Date of publication of application: 01.06.2022
(60) Divisional application: 25214028.0
(73) Proprietor: Komatsu Ltd., Minato-ku Tokyo 107-8414 (JP)
(72) Inventor: OKABE, Kazuyoshi, Tokyo 107-8414 (JP)
(74) Representative: Flügel Preissner Schober Seidel
(86) International application number: PCT/JP2020/037174
(87) International publication number: WO 2021/066019

(56) References cited:
- EP-A1- 2 100 774
- EP-A1- 3 715 536
- WO-A1-2019/130831
- JP-A- 2019 086 402
- JP-A- 2019 137 992
- JP-A- 2019 163 669
- JP-A- 2019 163 669
- JP-A- H06 193 098
- JP-U- 3 219 005

## Description

### TECHNICAL FIELD

The present invention relates to a work machine and a method for controlling a work machine.

### BACKGROUND ART

In a wheel loader, which is an example of a work machine, an automatic stop system that detects an obstacle in the rear and automatically stops has been proposed.

For example, in "NIPPO / Wheel loader automatic stop system development / Obstacle handling with stereo camera" July 8, 2016, 3rd page, Nikkan Kensetsu Kogyo Shimbun Online, Internet <URL: https://www.deen. co.jp/?p=72204 > , a stereo camera is installed in a wheel loader, and a foot brake is operated when an obstacle is recognized during the rearward travel.

In EP 2 100 774 A1 a wheel loader is disclosed comprising an object detection system that provides an alarm signal when travelling backwards. The wheel loader comprises a chassis, an object detection system having a controller, an object detector, a camera and a monitor. The object detection system is configured to detect the object within a range of the wheel loader. The object detector is configured to receive a detection signal from a rear end of the wheel loader if an object is detected and is configured to detect a distance of the object from the rear end of the loader. Once the object is detected, the controller activates an audible alarm to alert the operator. The alarm signal can change its repeating pattern with a change in the distance of the wheel loader to the object.

In WO 2019/130831 A1 a hydraulic excavator as a work machine is disclosed including an obstacle detection device that takes into account the state of inclination of the construction machine with respect to its surrounding ground area. The work machine comprises a chassis including a travelling unit and a working device arranged in front of the traveling unit. The travelling unit includes crawler tracks disposed on the left and right side of the travel frame. Further, the work machine comprises obstacle detection sensors provided for detecting an object in the vicinity of the slewing body. It is also an obstacle handling processing section disclosed which is configured to restrict for example the slewing motion or a travel motion of the chassis during operation of the hydraulic excavator.
WO 2019/130831 A1 discloses the features of the preambles of claims 1 and 7.

### SUMMARY OF THE INVENTION

However, the wheel loader may perform the scooping-up work of accumulating earth and sand, and the wheel loader climbs the slope of the mountain of earth and sand to perform the scooping-up work. In such a case, the conventional automatic stop system detects the ground as an obstacle during the rearward travel and outputs an obstacle alarm, which is troublesome for the operator.

It is an object of the present disclosure to provide a work machine and a method for controlling a work machine being able to reduce alarms due to false detection.

### (MEANS TO SOLVE PROBLEM)

A work machine according to a first aspect of the invention comprises: a vehicle main body including a traveling unit and a work implement arranged in front of the traveling unit; a rear detection section configured to detect an object in rear of the vehicle main body; and a control section configured to determine whether or not the work machine is in a scooping-up work state based on an operation of the work implement during forward travel by driving the traveling unit, the control section being configured to change control of suppressing approach to the object during rearward travel, based on a determination about the scooping-up work state. The control corresponding to the detection of the rear detection section includes an automatic braking that automatically brakes the vehicle main body when the object is detected by the rear detection section, suppression of braking force of the automatic braking, or stop of the automatic braking. The work machine further includes a second notification section configured to notify suppression of braking force of the automatic braking or stop of the automatic braking. The control section is configured to notify an operator by the second notification section when suppressing the braking force of the automatic braking or stopping the automatic braking.

Preferred embodiments of the work machine are defined in claims 2 to 6 and 8 to 11.

According to a second aspect of the invention a method for controlling a work machine having a vehicle main body including a traveling unit and a work implement arranged in front of the traveling unit comprises the following steps: a rear detection step of detecting an object in rear of the vehicle main body; a scooping-up determination step of determining a scooping-up work state based on an operation of a work implement when traveling forward by driving of a traveling unit of a vehicle main body including the traveling unit and the work implement; a control step of changing control of suppressing approach to the object in the rear during rearward travel, based on determination about the scooping-up work state. The control corresponding to the detection of the rear detection section includes an automatic braking that automatically brakes the vehicle main body when the object is detected by the rear detection section, suppression of braking force of the automatic braking, or stop of the automatic braking. The work machine further includes a second notification section configured to notify suppression of braking force of the automatic braking or stop of the automatic braking. The control step includes notifying an operator when suppressing the braking force of the automatic braking or stopping the automatic braking

### (EFFECTS OF THE INVENTION)

According to the present disclosure, it is possible to provide a work machine and a method for controlling a work machine capable of reducing an alarm due to false detection.

### BRIEF DESCRIPTION OF THE DRAWINGS

FIG. 1 is a side view of the wheel loader in the first embodiment according to the present disclosure.
FIG.2 is a block diagram showing a configuration of a drive system, a braking system, an operation system, a notification system, and a controller of the wheel loader on FIG. 1.
FIG. 3 is a block diagram showing a configuration of the controller on FIG. 2.
FIG.4 is a side view for explaining an automatic braking function by detecting an obstacle in the wheel loader on FIG. 1
FIG. 5 is a diagram for explaining a scooping-up work by the wheel loader on FIG. 1.
FIG. 6 is a flow chart for explaining a control operation of the wheel loader on FIG. 1.
FIG. 7 is a block diagram showing a configuration of a drive system, a braking system, an operation system, a notification system, and a controller of the wheel loader in the second embodiment according to the present disclosure.
FIG. 8 is a block diagram showing a configuration of the controller on FIG. 7.
FIG. 9 is a diagram for explaining a scooping-up work by the wheel loader on FIG. 1.
FIG. 10 is a flow chart for explaining a control operation of the wheel loader on FIG. 7.
FIG. 11 is a block diagram showing a configuration of a drive system, a braking system, an operation system, and a notification system of the wheel loader in the third embodiment according to the present disclosure.
FIG. 12 is a block diagram showing the configuration of the controller on FIG. 11.
FIG. 13 is a diagram showing a transition of a work state of the wheel loader on FIG. 11.
FIG. 14 is a flow chart for explaining a control operation of the wheel loader on FIG. 11.
FIG. 15 is a block diagram showing a configuration of a drive system, a braking system, an operation system, a notification system, and a controller of a wheel loader in a modified example of the embodiment according to the present disclosure.

### DESCRIPTION OF EMBODIMENTS

A wheel loader as an example of the work machine according to the present disclosure will be described below with reference to the drawings.

### (Embodiment 1)

### <Configuration>

### (Overview of wheel loader)

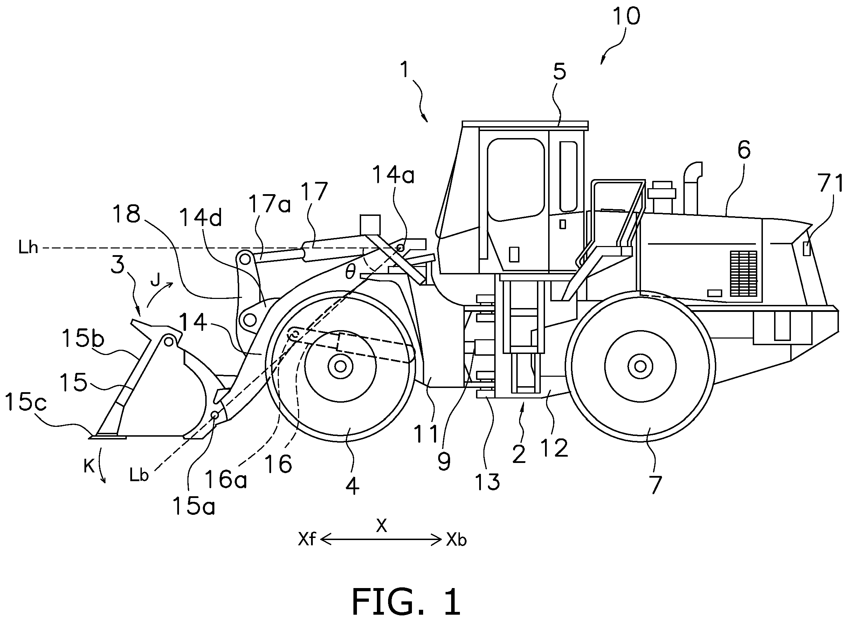

FIG. 1 is a schematic view showing a configuration of a wheel loader 10 (an example of a work machine) according to the present embodiment. In the wheel loader 10 of the present embodiment, a vehicle body frame 2, a work implement 3, a pair of front tires 4 (an example of wheels), a cab 5, an engine room 6, and a pair of rear tires 7 (an example of wheels), and steering cylinders 9 are provided to a vehicle main body 1. In the following description, "front", "rear", "right", "left", "top", and "bottom" indicate directions based on the state of looking forward from the driver's seat. In addition, "vehicle width direction" and "left-right direction" are synonymous. In FIG. 1, the front-rear direction is indicated by X, the front direction is indicated by Xf, and the rear direction is indicated by Xb. Further, the vehicle body frame 2, the front tires 4, and the rear tires 7 correspond to an example of a traveling unit.

The wheel loader 10 uses the work implement 3 to perform earth and sand loading work and the like.

The vehicle body frame 2 is a so-called articulate type, and includes a front frame 11, a rear frame 12, and a connecting shaft part 13. The front frame 11 is arranged in front of the rear frame 12. The connecting shaft part 13 is provided at the center in the vehicle width direction, and connects the front frame 11 and the rear frame 12 so as to be swingable with each other. The pair of front tires 4 are attached to the left and right sides of the front frame 11. Further, the pair of rear tires 7 are attached to the left and right sides of the rear frame 12.

The work implement 3 is driven by a hydraulic fluid from a work implement pump (not shown). The work implement 3 is swingably attached to the front part of the front frame 11. The work implement 3 includes a boom 14, a bucket 15, a lift cylinder 16, a bucket cylinder 17 (an example of an actuator), and a bell crank 18 (an example of a sub-link).

The base end of the boom 14 is rotatably attached to the front part of the front frame 11 by a boom pin 14a. The tip of the boom 14 is rotatably attached to the rear part of the bucket 15. The rear part of the bucket 15 is on the opposite side of an opening 15b. The tip of a cylinder rod 16a of a lift cylinder 16 is rotatably attached between the base end and the tip end of the boom 14. The cylinder main body of the lift cylinder 16 is rotatably attached to the front frame 11.

One end of the bell crank 18 is rotatably attached to the tip of a cylinder rod 17a of the bucket cylinder 17. The other end of the bell crank 18 is rotatably attached to the rear part of the bucket 15. The bell crank 18 is rotatably supported between both ends by a bell crank support 14d near the center of the boom 14. The cylinder main body of the bucket cylinder 17 is rotatably attached to the front frame 11. The expansion and contraction force of the bucket cylinder 17 is converted into rotational motion by the bell crank 18 and transmitted to the bucket 15.

The bucket 15 is rotatably attached to the tip of the boom 14 by a bucket pin 15a so as to open toward the front. Due to the expansion and contraction of the bucket cylinder 17, the bucket 15 rotates with respect to the boom 14 to perform a tilt operation (see arrow J) and a dump operation (see arrow K). Here, the tilt operation of the bucket 15 is an operation of inclining the opening 15b and the claw 15c of the bucket 15 by rotating toward the cab 5. The dump operation of the bucket 15 is opposite to the tilt operation, and is an operation of inclining by rotating the opening 15b and the claw 15c of the bucket 15 so as to move away from the cab 5.

The cab 5 is arranged on the rear frame 12, and a steering wheel for steering operation, a lever for operating the work implement 3, various display devices, and the like are arranged inside. The engine room 6 is arranged on the rear side of the cab 5 and on the rear frame 12, and houses the engine 31.

### (Configuration related to control of wheel loader)

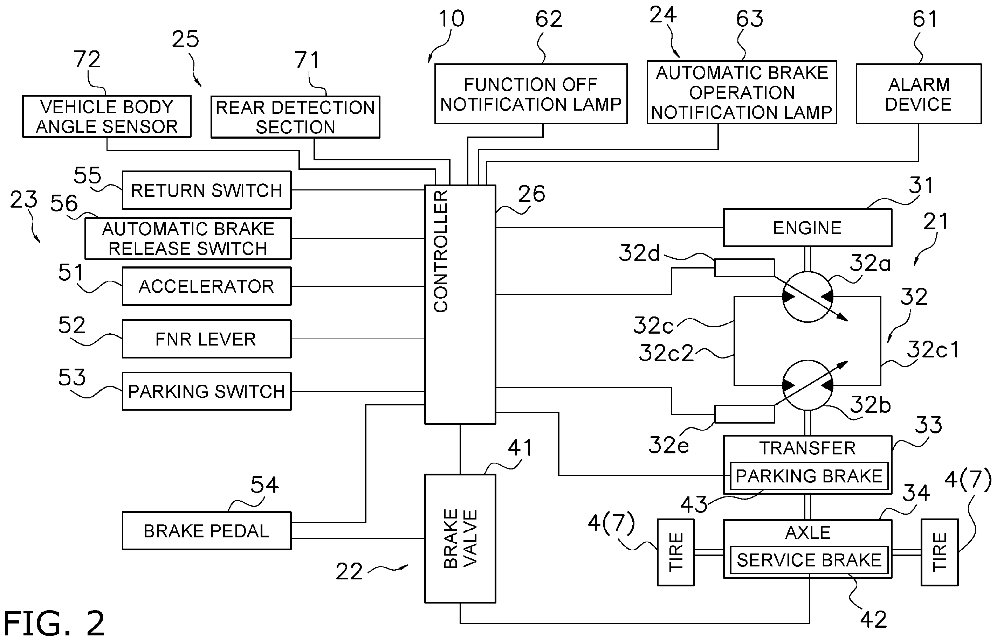

FIG. 2 is a block diagram showing a configuration related to the control of the present disclosure of the wheel loader 10.

The wheel loader 10 includes a drive system 21, a braking system 22, an operation system 23, a notification system 24, a detection system 25, and a controller 26 (an example of a control section).

The drive system 21 drives the wheel loader 10. The braking system 22 brakes while the wheel loader 10 is traveling. The operation system 23 is operated by the operator. The drive system 21 and the braking system 22 operate based on the operation of the operation system 23 by the operator. The notification system 24 notifies the operator based on the operation of the operation system 23 or the detection result by the detection system 25. The detection system 25 detects an inclination state of the vehicle main body 1 and an obstacle (an example of an object) in the rear of the vehicle main body 1. The controller 26 (an example of the control section) operates the drive system 21, the braking system 22, and the notification system 24 based on the operator's operation on the operation system 23 and the detection by the detection system 25.

### (Drive system 21)

The drive system 21 includes an engine 31, an HST 32, a transfer 33, an axle 34, front tires 4, and rear tires 7.

The engine 31 is, for example, a diesel engine, and the driving force generated by the engine 31 drives the pump 32a of the HST (Hydro Static Transmission) 32.

The HST 32 includes a pump 32a, a motor 32b, and a hydraulic circuit 32c connecting the pump 32a and the motor 32b. The pump 32a is a swash plate type variable displacement pump, and the angle of the swash plate can be changed by the solenoid 32d. The pump 32a is driven by the engine 31 to discharge the hydraulic fluid. The discharged hydraulic fluid is sent to the motor 32b through hydraulic circuit 32c. The motor 32b is a swash plate type, and the angle of the swash plate can be changed by the solenoid 32e. The hydraulic circuit 32c includes a first drive circuit 32c1 and a second drive circuit 32c2. The hydraulic fluid is supplied from the pump 32a to the motor 32b through the drive circuit 32c1 so that the motor 32b is driven in one direction (for example, in the forward direction). The hydraulic fluid is supplied from the pump 32a to the motor 32b through the drive circuit 32c2 so that the motor 32b is driven in another direction (for example, in the rearward direction). The discharge direction of hydraulic fluid to the first drive circuit 32c1 or the second drive circuit 32c2 can be changed by the solenoid 32d.

The transfer 33 distributes the output from the engine 31 to the front and rear axles 34.

A pair of front tires 4 are connected to the axle 34 on the front side, and rotate with the distributed output from the engine 31. Further, a pair of rear tires 7 are connected to the rear axle 34, and rotate with the distributed output from the engine 31.

### (Brake system 22)

The braking system 22 includes a brake valve 41, a service brake 42, and a parking brake 43.

The brake valve 41 is, for example, an EPC (Electric Proportional Valve) valve, and the amount of hydraulic fluid sent to the service brake 42 can be adjusted by adjusting the opening degree.

The service brake 42 is provided on the axle 34. The service brake 42 is a hydraulic brake. For example, when the opening degree of the brake valve 41 is large, the braking force becomes strong, and when the opening degree of the brake valve 41 is small, the braking force becomes weak.

As a function of the automatic braking, the brake valve 41 is driven by an instruction from the controller 26 even when the brake pedal 54 described later is not operated, and the service brake 42 is operated.

The parking brake 43 is provided on the transfer 33. As the parking brake 43, a wet multi-stage brake that can switch between a braking state and a non-braking state, a disc brake, and the like can be used.

### (Operation system 23)

The operation system 23 includes an accelerator 51, an FNR lever 52 (an example of an operation member), a parking switch 53, a brake pedal 54, a return switch 55, and an automatic brake release switch 56.

The accelerator 51 is provided in the cab 5. The operator operates the accelerator 51 to set the throttle opening degree. The accelerator 51 generates an opening signal indicating an accelerator operation amount and transmits it to the controller 26. The controller 26 controls the rotation speed of the engine 31 based on the transmitted signal.

When the accelerator 51 is turned off, the fuel supply to the engine 31 is stopped, the swash plate of the pump 32a and the swash plate of the motor 32b are controlled to be a travelling resistance, and the internal inertia works, so that the braking force (weak braking force, which will be described later) is generated.

The FNR lever 52 is provided in the cab 5. The FNR lever 52 can take a forward, neutral, or reverse position. An operation signal indicating the position of the FNR lever 52 is transmitted to the controller 26, and the controller 26 controls the solenoid 32d to switch between the forward travel and the reverse travel.

The parking switch 53 is provided in the cab 5 and is a switch capable of switching the state on and off, and transmits a signal indicating the state to the controller 26. The controller 26 sets the parking brake 43 in a braking state or a non-braking state based on the transmitted signal.

The brake pedal 54 is provided in the cab 5. The brake pedal 54 adjusts the opening degree of the brake valve 41. Further, the brake pedal 54 transmits the operation amount to the controller 26.

The return switch 55 is operated by the operator in order to recover from the stopped state after the vehicle main body 1 is stopped by the automatic braking described later.

The automatic brake release switch 56 releases the automatic braking function and is set so that the automatic braking function does not work.

### (Notification system 24)

The notification system 24 includes an alarm device 61 (an example of a first notification section), a function OFF notification lamp 62 (an example of a second notification section), and an automatic brake operation notification lamp 63.

The alarm device 61 gives an alarm to the operator when an obstacle is detected in the rear of the vehicle main body 1 based on the detection of the rear detection section 71 of the detection system 25 described later. The alarm device 61 may include, for example, a lamp, and the lamp may be turned on. Further, the alarm device 61 may include a speaker and make a sound, not limited to the lamp. Further, the alarm may be displayed on a display panel such as a monitor.

The function OFF notification lamp 62 is turned on, for example, to notify the operator when the automatic braking function is suppressed or stopped by the determination of the controller 26. Further, the function OFF notification lamp 62 is turned on, for example, to notify the operator when the automatic brake release switch 56 is operated by the operator's determination and the automatic brake function is in the OFF state. Further, when the function OFF notification lamp 62 is turned off, it indicates that the automatic braking function can be operated. Further, the function OFF notification lamp 62 is not limited to the lamp, and may make a sound. Further, the notification may be displayed on a display panel such as a monitor.

The automatic brake operation notification lamp 63 notifies the operator that the automatic braking is operating, and notifies that the return operation by the return switch 55 is necessary. When the return switch 55 is operated and the automatic brake is released, the automatic brake operation notification lamp 63 is turned off.

The automatic brake operation notification lamp 63 is not limited to the lamp, and may make a sound. Further, the notification may be displayed on a display panel such as a monitor.

As described above, the means of notifying the operator of information by the notification system 24 can be appropriately selected such as a lamp, a sound, and a monitor.

### (Detection system 25)

As shown in FIG. 2, the detection system 25 includes a rear detection section 71 and a vehicle body angle sensor 72 (an example of an inclination state detection section).

The rear detection section 71 detects an obstacle in the rear of the vehicle main body 1. The rear detection section 71 is attached to, for example, the rear end of the vehicle main body 1 as shown in FIG. 1, but is not limited to the rear end.

The rear detection section 71 includes, for example, a millimeter wave radar. The receiving antenna can detect how the millimeter-wave band radio waves emitted from the transmitting antenna are reflected on the surface of the obstacle and returned, and the distance to the object can be measured. The detection result by the rear detection section 71 is transmitted to the controller 26, and the controller 26 can detect that an obstacle exists within a predetermined range when traveling rearward. It is not limited to the millimeter wave radar, and may be, for example, a camera.

The vehicle body angle sensor 72 detects the inclination state of the vehicle main body 1. The vehicle body angle sensor 72 detects whether or not the vehicle main body 1 is in an inclination state by detecting the angle of the vehicle main body 1. An IMU (Inertial Measurement Section) may be used instead of the vehicle body angle sensor 72, and the inclination state of the wheel loader 10 may be determined based on the detection images of the cameras installed inside and outside the vehicle main body. Further, the configuration is not limited to these configurations as long as it can detect the inclination state of the wheel loader 10.

### (Controller 26)

The controller 26 includes a processor such as a CPU (Central Processing Section), a main memory including a non-volatile memory such as a ROM (Read Only Memory) and a volatile memory such as a RAM (Random Access Memory), and a storage. The controller 26 reads the program stored in the storage, expands it in the main memory, and executes a predetermined process according to the program. The program may be distributed to the controller 26 via the network.

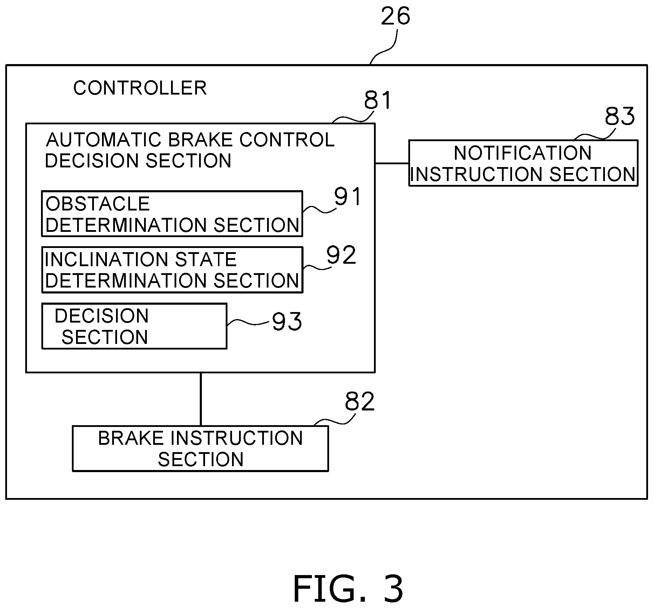

FIG. 3 is a block diagram showing the configuration of the controller 26.

The controller 26 includes an automatic brake control decision section 81, a brake instruction section 82, and a notification instruction section 83. The controller 26 is not limited to one, and a plurality of controllers 26 may be provided, and the functions of the automatic brake control decision section 81, the brake instruction section 82, and the notification instruction section 83 may be also provided separately for the plurality of controllers.

The automatic brake control decision section 81 determines the control of the automatic braking. The automatic brake control decision section 81 includes an obstacle determination section 91, an inclination state determination section 92, and a decision section 93.

The obstacle determination section 91 determines whether or not an obstacle exists when traveling rearward. The obstacle determination section 91 detects the rearward travel using the front tire 4 or the rear tire 7 rotating toward the rear, or using the FNR lever 52 being in the reverse position. When the obstacle determination section 91 receives the obstacle detection information within a predetermined range from the rear detection section 71 of the detection system 25 under the state of detecting the rearward travel, the obstacle determination section 91 determines that the obstacle exists.

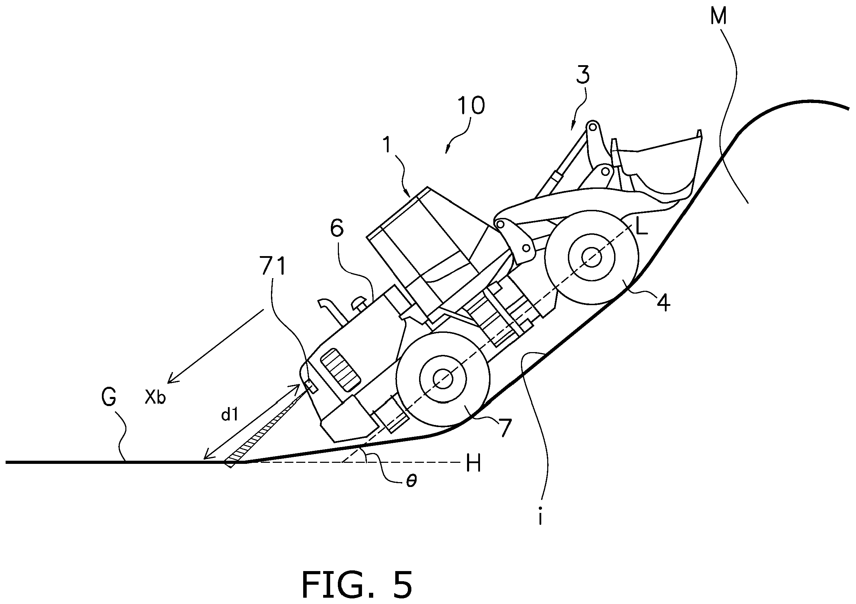

The inclination state determination section 92 determines that the vehicle main body 1 is arranged on a inclined surface that falsely detects the ground as an obstacle when the vehicle body angle sensor 72 detects that the inclination angle is equal to or more than a predetermined angle (for example, 15 °). The inclination angle θ (see FIG. 5 to be described later) is an angle at which the front side of the wheel loader 10 is lifted with respect to the horizontal.

The decision section 93 decides the automatic braking control based on the determination result of the obstacle determination section 91 and the determination result of the inclination state determination section 92.

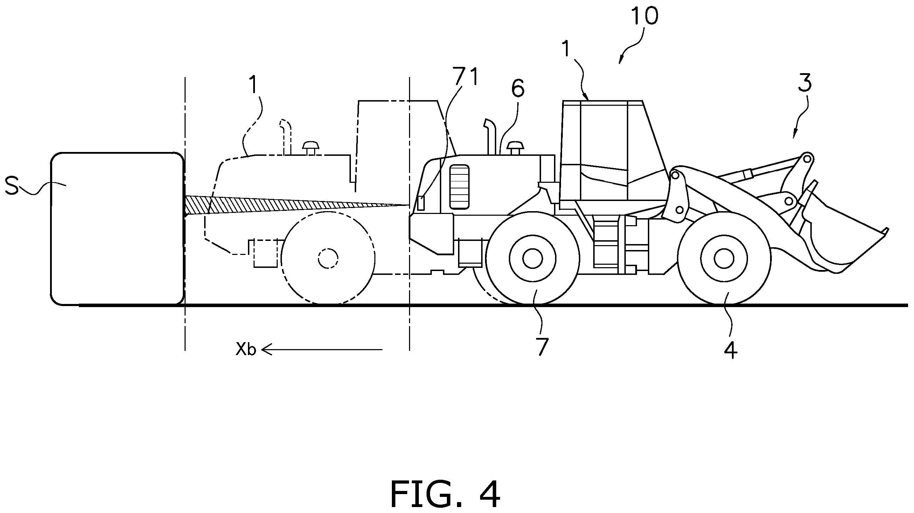

When the obstacle determination section 91 determines that an obstacle exists during the rearward travel and the inclination state determination section 92 determines that the inclination angle is less than a predetermined angle, as shown in FIG. 4, which will be described later, the decision section 93 decides to perform a first control of operating the automatic braking and issuing an alarm notifying the existence of an obstacle. The reason for this is that since the inclination angle is detected to be less than a predetermined angle, it can be determined that the wheel loader 10 does not perform work such as scooping-up and that the detection of the obstacle is not an erroneous detection.

Further, when the obstacle determination section 91 determines that an obstacle exists during the rearward travel but the inclination state determination section 92 determines that the inclination angle is equal to or more than the predetermined angle, the decision section 93 decides a second control of notifying that the automatic braking function is stopped without activating the automatic braking. The reason for this is that since the inclination angle is detected to be equal to or more than a predetermined angle, as shown in FIG. 5, which will be described later, it can be determined that the wheel loader 10 is performing work such as scooping-up and that the ground is erroneously detected as an obstacle.

The brake instruction section 82 controls the automatic braking based on the determination of either the first control or the second control of the decision section 93. The automatic braking in the present specification is to automatically activate a braking force to the vehicle main body 1 based on the determination result of the obstacle determination section 91 and the determination result of the inclination state determination section 92, and is not limited to the braking force of the service brake 42 as described later.

The notification instruction section 83 gives an operation instruction to the alarm device 61 or the function OFF notification lamp 62 based on the determination of either the first control or the second control of the decision section 93.

When the decision section 93 decides to perform the first control, the brake instruction section 82 stops the fuel supply to the engine 31 by turning off the accelerator 51. Then, the brake instruction section 82 drives the service brake 42 by operating the brake valve 41 to stop the vehicle main body 1. The notification instruction section 83 operates the alarm device 61 to notify the operator of the existence of an obstacle and the operation of the automatic braking.

FIG. 4 is a diagram showing a state in which the obstacle S is detected when traveling rearward and the vehicle main body 1 is stopped. In the first control, the service brake 42 is operated by a preset braking force (which can be said to be braking force) that causes the vehicle main body 1 to stop in front of the obstacle S, and the vehicle main body 1 is stopped. In FIG. 4, the stopped vehicle main body 1 is shown by a two-dot chain line.

In the automatic braking by the preset braking force, the vehicle main body 1 may not be braked by the service brake 42 as described above, and the parking brake 43 may be operated. In this case, when the decision section 93 decides to perform the first control, the brake instruction section 82 stops the fuel supply to the engine 31 by turning off the accelerator 51. Then, the brake instruction section 82 controls the parking brake 43 to brake the vehicle main body 1.

When the decision section 93 decides to perform the second control, the notification instruction section 83 controls to light the function OFF notification lamp 62, and not to perform the operation of the brake valve 41 by the brake instruction section 82 and the operation of the alarm device 61 by the notification instruction section 83.

FIG. 5 is a diagram showing a state in which the wheel loader 10 is performing a scooping-up work. As shown in FIG. 5, a pile M of earth and sand is formed on the ground G, and a wheel loader 10 is arranged on the slope i thereof. Since the wheel loader 10 goes up and down the slope i at the time of scooping-up, the ground G is detected as an obstacle S every time the vehicle travels rearward. Therefore, in the present embodiment, in the state in which the angle θ detected by the vehicle body angle sensor 72 is equal to or more than the predetermined angle, the control is performed not to operate automatic braking and not to activate the alarm device 61 even when an obstacle is detected. The inclination angle θ is, for example, the angle formed by the line L connecting the axis of the front tire 4 and the axis of the rear tire 7 and the horizontal line H.

As a result, since false detection can be suppressed, it is possible to improve work efficiency.

### <Operation>

Next, the control operation of the wheel loader 10 of the present embodiment will be described.

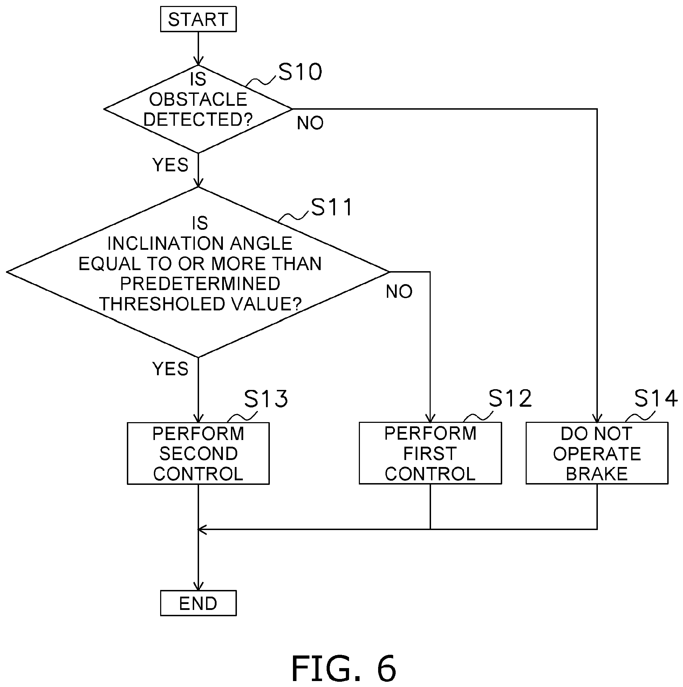

FIG. 6 is a flow chart showing a control operation of the wheel loader 10 of the present embodiment.

First, in step S10 (an example of the rear detection step), the obstacle determination section 91 of the controller 26 determines whether or not an obstacle is detected when the vehicle main body 1 travels rearward. The obstacle determination section 91 determines that the vehicle main body 1 is in the rearward traveling state using the front tire 4 or the rear tire 7 rotating toward the rear or using the FNR lever 52 being in the reverse position. The obstacle determination section 91 determines that an obstacle exists by receiving the obstacle detection information within the predetermined range from the rear detection section 71 of the detection system 25 in the state of detecting that the reverse travel is performed.

When it is not determined in step S10 that an obstacle exists, the controller 26 does not activate the automatic braking in step S14, and the control ends. In step S14, since the existence of the obstacle is not detected, the alarm device 61 does not give an alarm.

In step S11 (an example of the inclination state detection step), when the inclination state determination section 92 determines that the inclination angle θ is less than the predetermined threshold value (for example, 15 degrees), the decision section 93 decides to perform the first control. The first control is performed in step S12.

In the first control of step S12 (an example of the control step), in the controller 26, the brake instruction section 82 stops the fuel supply to the engine 31. Then, the brake instruction section 82 operates the brake valve 41 to drive the service brake 42 and stop the vehicle main body 1. The notification instruction section 83 operates the alarm device 61 to notify the operator of the existence of an obstacle and the operation of the automatic braking, and the control ends.

On the other hand, when it is determined in step S11 that the inclination angle θ is equal to or more than the predetermined threshold value, the decision section 93 decides to perform the second control, and the second control is performed in step S13.

In the second control of step S13 (an example of the control step), the notification instruction section 83 does not operate the alarm device 61, turns on the function OFF notification lamp 62, and the control ends. The controller 26 does not control the brake valve 41.

As a result, in the case of an inclination state in which the ground G is detected as an obstacle, the automatic braking function and the alarm device 61 can be stopped.

Therefore, it is possible to reduce the alarm due to erroneous detection.

Further, since the automatic braking function can be stopped, it is possible to prevent the wheel loader from being unable to descend from the earth and sand pile M by detecting the ground during the scooping-up work.

Further, for example, when the control is started again after the control ends by performing the first control in step S12 and then no obstacle is detected in step S10, the operation of the brake is stopped in step S14. In this way, even when there are no obstacles in the middle of traveling rearward, the automatic braking can be appropriately controlled. The same applies when an obstacle appears during the rearward travel.

### (Embodiment 2)

Next, the wheel loader 10 of the second embodiment according to the present disclosure will be described.

### <Configuration>

The wheel loader 10 of the second embodiment does not include the vehicle body angle sensor 72 as compared with the first embodiment.

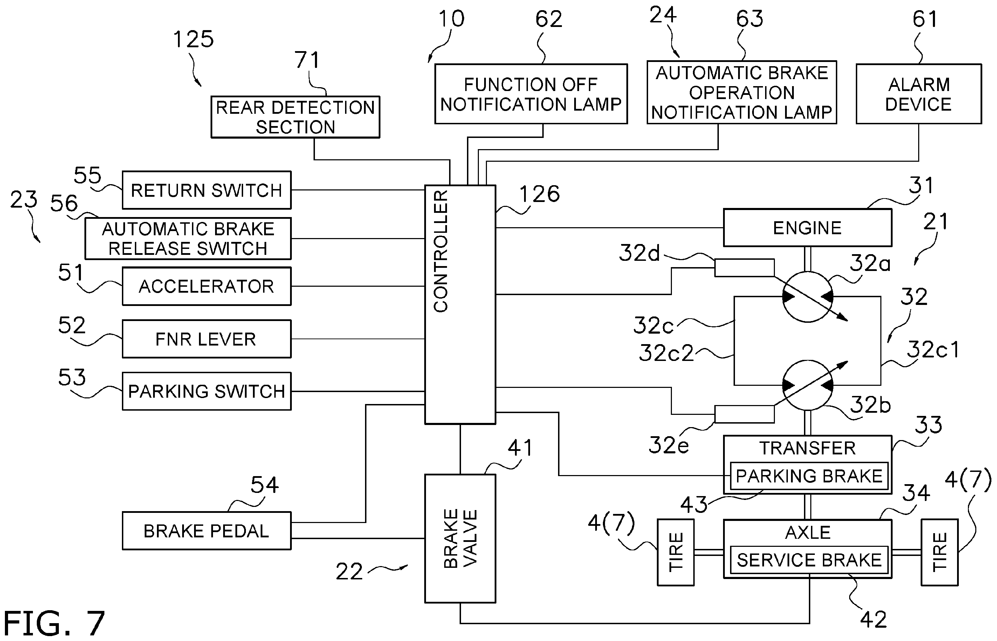

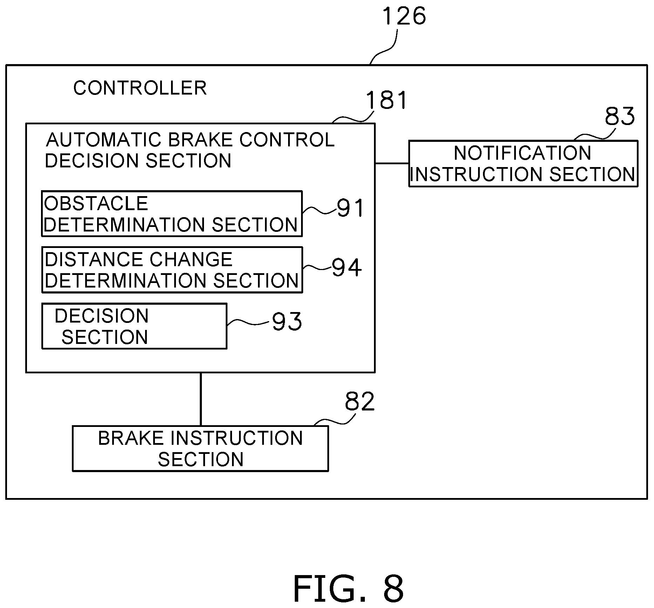

FIG. 7 is a block diagram showing a configuration of a drive system, a braking system, an operation system, a notification system, and a controller of the wheel loader of the second embodiment. FIG. 8 is a block diagram showing the configuration of the controller 126 shown in FIG. 7.

The detection system 125 of the second embodiment includes the rear detection section 71, but does not include the vehicle body angle sensor 72.

Further, the automatic brake control decision section 181 of the controller 126 in the second embodiment includes a distance change determination section 94 instead of the inclination state determination section 92 of the automatic brake control decision section 81 in the first embodiment.

The distance change determination section 94 of the second embodiment determines the change in the distance to the detected object by using the detection result from the rear detection section 71. By using, for example, a millimeter wave radar for the rear detection section 71, the distance to the object can be measured.

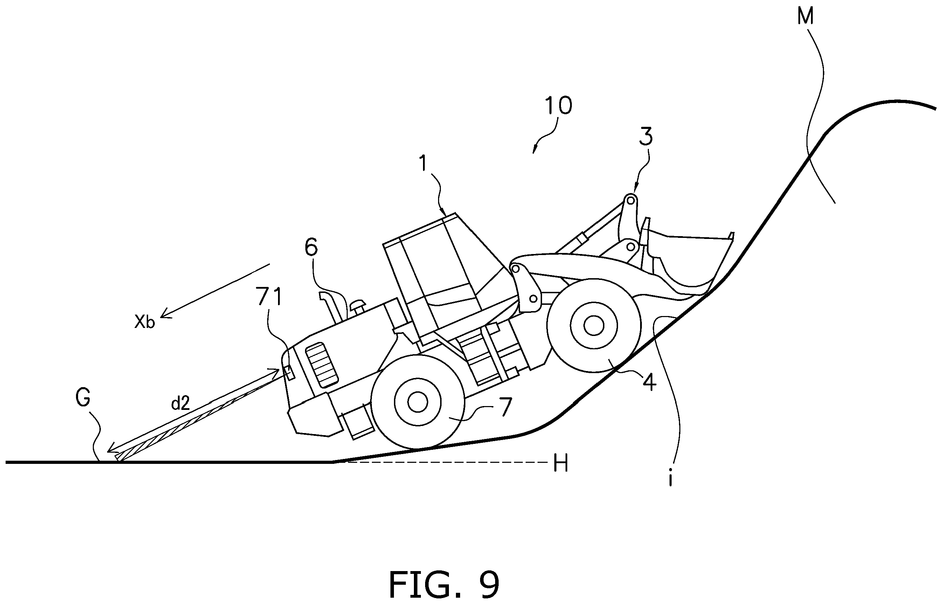

Although the scooping-up work of the wheel loader 10 has been described with reference to FIG. 5, the scooping-up work involves ascending and descending a mountain M of earth and sand. FIG. 9 is a diagram showing a wheel loader 10 in a state lowered from the state of FIG. 5. In FIG. 5, the distance from the rear detection section 71 to the ground G is indicated by d1, and in FIG. 9, the distance from the rear detection section 71 to the ground G is indicated by d2. As shown in FIGS. 5 and 9, when the wheel loader 10 descends the mountain M of earth and sand, the inclination becomes gentle, so that the distance from the rear detection section 71 to the ground G becomes long as shown in d1 <d2.

The distance change determination section 94 of the present embodiment determines whether or not the distance to the object determined to be an obstacle by the obstacle determination section 91 becomes long during the rearward travel.

When the obstacle determination section 91 determines that an obstacle exists during the rearward travel and determines that the distance to the obstacle becomes long during the rearward travel, the decision section 93 decides to perform the second control of notifying that the automatic braking function is stopped without activating the automatic braking. This is for the reason that since the distance to the obstacle becomes long during the rearward travel, it is determined that the wheel loader 10 is performing work such as scooping-up, and that the ground is erroneously detected as an obstacle. It is not always necessary to notify that the automatic braking function is stopped.

Further, when the obstacle determination section 91 determines that an obstacle exists during the rearward travel and determines that the distance to the obstacle does not become long during the rearward travel, the decision section 93 decides to perform the first control of activating the automatic braking and issuing an alarm notifying the existence of the obstacle. This is for the reason that since the distance to the obstacle does not become long, it is determined that the wheel loader 10 does not perform work such as scooping-up, and that the detection of the obstacle is not an erroneous detection.

### <Operation>

Next, the control operation of the wheel loader 10 of the second embodiment will be described.

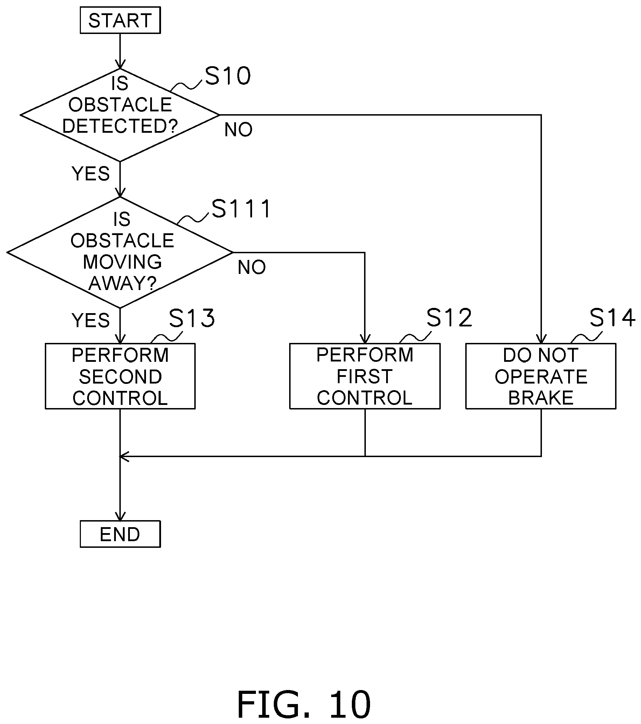

FIG. 10 is a flow chart showing a control operation of the wheel loader 10 of the second embodiment.

First, in step S10 (an example of the rear detection step), the obstacle determination section 91 of the controller 26 determines whether or not an obstacle is detected when the vehicle main body 1 travels rearward. The obstacle determination section 91 determines that the vehicle main body 1 is in the rearward traveling state using the front tire 4 or the rear tire 7 rotating toward the rear, or using the FNR lever 52 being in the reverse position. When the obstacle determination section 91 receives the obstacle detection information within the predetermined range from the rear detection section 71 of the detection system 125 in the state of detecting that the reverse travel is being performed, the obstacle determination section 91 determines that an obstacle exists. When it is not determined in step S10 that an obstacle exists, the controller 26 does not activate the automatic braking in step S14, and the control ends. In step S14, since the existence of the obstacle is not detected, the alarm device 61 does not give an alarm.

Next, in step S111 (an example of the distance change determination step), the distance change determination section 94 determines whether or not the distance to the obstacle becomes long during the rearward travel with the obstacle determination section 91. The distance change determination section 94 compares the distance to the obstacle at a predetermined first point in time and the distance to the obstacle at the second point in time after the first point in time, and determines that the distance to the obstacle becomes long when the distance at the second point in time is longer than the distance at the first point in time.

When the distance change determination section 94 does not determine that the distance to the obstacle does not become long in step S111, the decision section 93 decides to perform the first control, and the first control is performed in step S12.

In the first control of step S12 (an example of the control step), in the controller 26, the brake instruction section 82 stops the fuel supply to the engine 31. Then, the brake instruction section 82 operates the brake valve 41 to drive the service brake 42 and stop the vehicle main body 1. The notification instruction section 83 operates the alarm device 61 to notify the operator of the existence of the obstacle and the operation of the automatic braking, and the control ends.

On the other hand, when the distance change determination section 94 determines that the distance to the obstacle becomes long in step S111, the decision section 93 decides to perform the second control, and the second control is performed in step S13.

In the second control in step S13 (an example of the control step), the notification instruction section 83 does not operate the alarm device 61, turns on the function OFF notification lamp 62, and the control ends. The controller 26 does not control the brake valve 41.

As a result, it can be determined that the ground G is detected as an obstacle, and it is possible to stop the automatic braking function and the alarm device 61.

### (Embodiment 3)

Next, the wheel loader 10 of the third embodiment according to the present disclosure will be described.

In the first embodiment, when the inclination angle is equal to or more than the predetermined threshold value, it is determined that the scooping-up work is performed and the second control is performed. However, in the third embodiment, it is determined that the scooping-up work is performed based on the operation of the work implement 3 or the like.

### <Configuration>

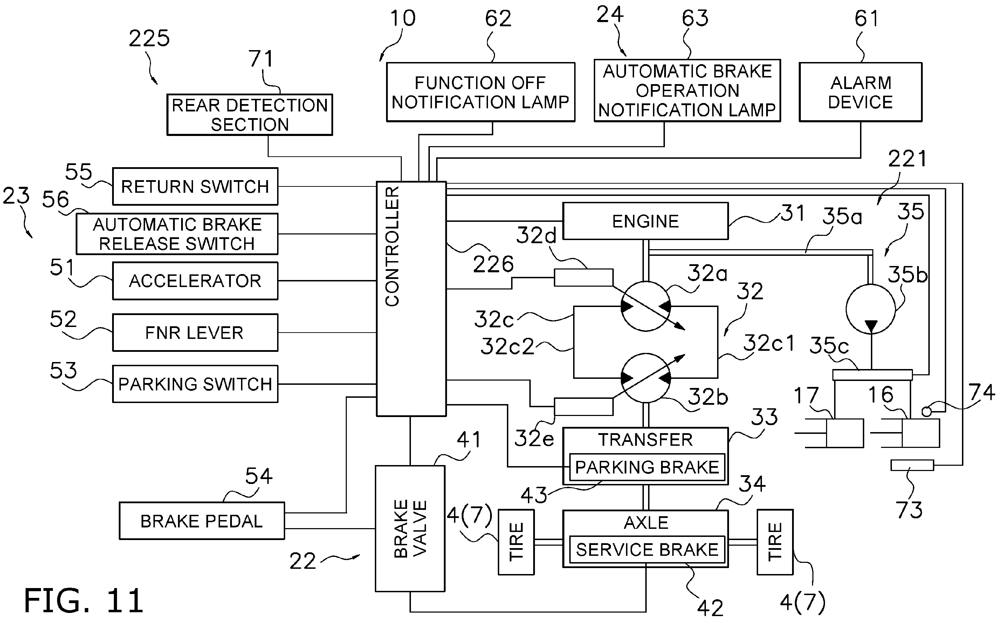

FIG. 11 is a block diagram showing a configuration related to control of the wheel loader 10 of the third embodiment.

In addition to the configuration of the drive system 21 of the first embodiment, the drive system 221 of the wheel loader 10 in the third embodiment is further provided with a cylinder drive section 35.

The cylinder drive section 35 includes a power take-off section 35a, a work implement pump 35b, and a control valve 35c. The power take-off section 35a is a PTO (Power Take Off), and for example, take off the output from the engine 31 in the state in which the vehicle main body 1 stopped and transmitted it to the work implement pump 35b. The work implement pump 35b is driven by the power of the engine 31 and discharges hydraulic fluid to the control valve 35c. The control valve 35c supplies the hydraulic fluid supplied from the work implement pump 35b to the lift cylinder 16 (an example of a boom cylinder) and the bucket cylinder 17 based on a command from the controller 26.

Unlike the first embodiment, the detection system 225 of the wheel loader 10 in the third embodiment does not include the vehicle body angle sensor 72, and includes a boom angle sensor 73 (an example of a work implement height detection section) and a boom bottom pressure sensor 74 in addition to the rear detection section 71.

The boom angle sensor 73 detects the angle of the boom 14, and outputs the detected value to the controller 226 (an example of the control section). The boom angle sensor 73 can be configured with a potentiometer and is arranged, for example, on the boom pin 14a.

As shown in FIG. 1, the angle of the boom 14 is an angle θ of a straight line Lb, which extends in a direction from the center of the boom pin 14a toward the center of the bucket pin 15a, with respect to the horizontal line Lh extending forward from the center of the boom pin 14a. When the straight line Lb is horizontal, the boom angle is 0 °. The angle θ of the boom 14 when the straight line Lb is above the horizontal line Lh is set as a positive value. The angle θ of the boom 14 when the straight line Lb is below the horizontal line Lh is set as a negative value.

The boom angle sensor 73 may be a stroke sensor provided on the lift cylinder 16.

The boom bottom pressure sensor 74 is attached to the bottom side of the lift cylinder 16. Pressure is applied to the bottom side of the lift cylinder 16, and this pressure causes the cylinder to expand and the boom 14 to rise. The boom bottom pressure sensor 74 detects the pressure (bottom pressure) of the hydraulic fluid in the oil chamber on the cylinder bottom side of the lift cylinder 16. The boom bottom pressure sensor 74 transmits the detected bottom pressure to the controller 226.

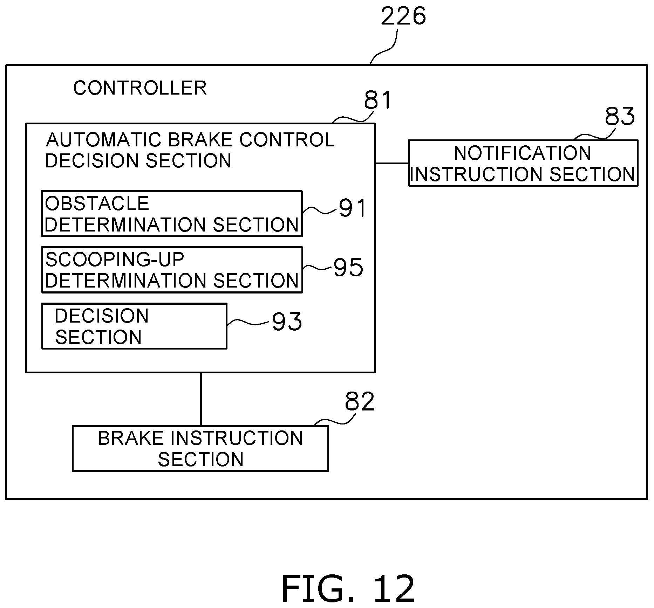

FIG. 12 is a block diagram showing the configuration of the controller 226.

Unlike the controller 26 of the first embodiment, the controller 226 includes a scooping-up determination section 95 instead of the inclination state determination section 92. The scooping-up determination section 95 determines whether or not the work content of the wheel loader 10 is a scooping-up work during the forward travel.

The scooping-up determination section 95 determines whether or not the wheel loader 10 is in the excavation work state at the time of traveling forward, and it is determined whether or not the excavation work state is the scooping-up work state while the determination of the excavation work state is maintained.

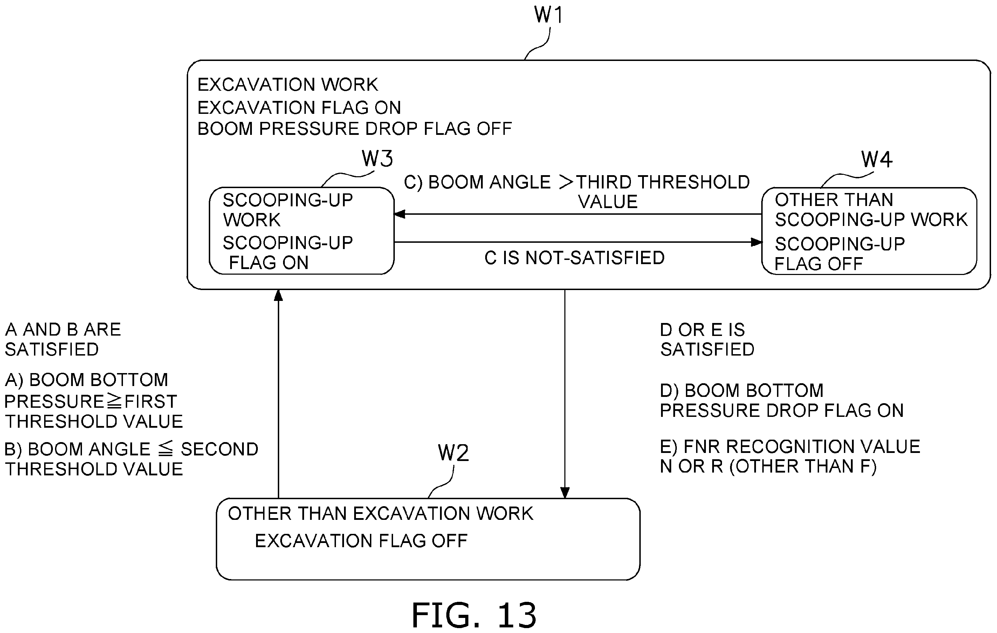

FIG. 13 is a diagram showing state transitions of work contents. The scooping-up determination section 95 determines an excavation work state W1 and a state W2 other than the excavation work.

The scooping-up determination section 95 determines that the excavation work state W1 when a condition A and a condition B are satisfied at the time of traveling forward.

The scooping-up determination section 95 determined that the vehicle main body 1 is traveling forward (forward traveling state) using either the front tire 4 or the rear tire 7 rotating forward or the FNR lever 52 being in the forward position.

The condition (A) is that the boom bottom pressure, which is a value detected by the boom bottom pressure sensor 74, satisfies a first threshold value or more. The first threshold is stored in the controller 226. When the boom bottom pressure becomes equal to or more than a predetermined threshold value, it can be seen that the pressure is applied to the lift cylinder 16. That is, at the time of excavation or the like, pressure is applied to the lift cylinder 16 by loading earth and sand into the bucket 15, so that it is possible to determine whether or not the wheel loader 10 is in the excavation work state by detecting the boom bottom pressure.

The condition (B) is that the angle θ of the boom 14, which is a value detected by the boom angle sensor 73, satisfies a second threshold value or less. During excavation, the angle θ of the boom 14 is located below the horizontal state, so that the second threshold value is preferably a negative value. The second threshold value is stored in the controller 226.

That is, when the lift cylinder 16 is loaded with a pressure equal to or more than the predetermined first threshold value and the angle θ of the boom 14 becomes equal to or lower than the predetermined second threshold value, it is determined that the state of the wheel loader 10 is the excavation work state W1. When the scooping-up determination section 95 determines that the state of the wheel loader 10 is the excavation work state W1, the scooping-up determination section 95 sets the excavation flag to ON and the boom pressure drop flag to OFF.

Next, the scooping-up determination section 95 determines whether the state of the wheel loader 10 is a scooping-up work state W3 or a state W4 other than the scooping-up work state in the excavation work state W1. The scooping-up determination section 95 determines that the state of the wheel loader 10 is the scooping-up work state W3 when the condition (C) is satisfied while the excavation flag is ON, and determines that the state of the wheel loader 10 is the state W4 other than the scooping-up work state when the condition (C) is not satisfied.

The condition (C) is that the angle θ of the boom 14, which is a value detected by the boom angle sensor 73, is more than a third threshold value. The third threshold value is, for example, a negative value. The third threshold value is set to a value more than the second threshold value. The third threshold value is stored in the controller 226. The second threshold value indicates a time at which the position of the bucket 15 is close to the tire ground contact surface. The second threshold value can be set, for example, -40 °. Further, the third threshold value indicates a time at which the boom 14 is located at an about intermediate level between the horizontal state and the second threshold value state. The third threshold value can be set, for example, -20 °. The third threshold value and the second threshold value are set so that the boom 14 at the third threshold value is rotated upward from the boom 14 at the second threshold value.

The condition (B) and the condition (C) are set based on the magnitude of the angle of the boom 14, but are not limited to this. A position of the bucket 15 may be detected and the condition (B) and the condition (C) may be set based on the height of the bucket 15. The position of the bucket 15 can be detected by, for example, a camera provided in the cab 5. Further, the third threshold value and the second threshold value are set so that the height of the bucket 15 at the third threshold value is higher than the height of the bucket 15 at the second threshold value.

In this way, the condition (B) and the condition (C) may be set based on the height of work implement3, and the height of work implement3 at the third threshold value may be set higher than the height of work implement3 at the second threshold value.

When the scooping-up determination section 95 determines that the state of the wheel loader 10 is the scooping-up work state W3, the scooping-up determination section 95 sets a scooping-up flag. Further, when the scooping-up determination section 95 determines that the condition (C) is not satisfied while the excavation flag is ON, the scooping-up determination section 95 sets the scooping-up flag to OFF.

Since the boom 14 is located above during scooping-up as compared with normal excavation, by detecting the angle θ of the boom 14 in the excavation work state W1, it is possible to distinguish the scooping-up work state W3 or the state W4 other than the scooping-up work.

When the condition (D) or the condition (E) is satisfied while the excavation flag is ON, the scooping-up determination section 95 sets the excavation flag to OFF, assuming that the wheel loader 10 is in a state W2 other than the excavation work.

The condition (D) is that the boom bottom pressure drop flag is in the ON state. When the value detected by the boom bottom pressure sensor 74 is smaller than the boom bottom pressure as a preset threshold value based on the angle θ of the boom 14, the boom bottom pressure drop flag is set to ON. Here, the boom bottom pressure as a preset threshold value based on the angle θ of the boom 14 is stored in the controller 226.

In this way, when the boom bottom pressure becomes smaller than the threshold value set based on the boom angle for a predetermined time, the scooping-up determination section 95 sets the boom pressure drop flag to ON, and determines that the state has changed to the state W2 other than the excavation work and set the excavation flag to OFF.

The condition (E) is that the position of the FNR lever 52 is arranged at a position other than the forward (F) (reverse (R) or neutral (N)). When the wheel loader 10 is not traveling forward, the scooping-up determination section 95 determines that the state of the wheel loader 10 is the state W2 other than the excavation work, and sets the excavation flag to OFF.

As described above, when the scooping-up determination section 95 determines that the wheel loader 10 is in the excavation work state W1 by satisfying the condition (A) and the condition (B) and when the condition (C) is further satisfied while the determination is maintained, the scooping-up determination section 95 determines that the wheel loader 10 is in the scooping-up work state W3 and sets the scooping-up flag to ON.

The decision section 93 decides the control of the automatic braking based on the determination result of the obstacle determination section 91 and the determination result of the scooping-up determination section 95.

The decision section 93 decides to perform the first control of operating the automatic brake and of issuing an alarm notifying the existence of an obstacle when the scooping-up determination section 95 determines the state in which the wheel loader 10 is not the scooping-up work state(in FIG. 12, the state W2 other than the excavation work or the state W4 other than the scooping-up work) and when the obstacle determination section 91 determines that an obstacle exists during the rearward travel. This is because it is determined that the wheel loader 10 has not performed the scooping-up work and that the obstacle detection is not an erroneous detection.

Further, The decision section 93 decides to perform the second control of notifying that the automatic braking function is stopped without activating the automatic braking when the obstacle determination section 91 determines that an obstacle exists during traveling rearward after the scooping-up determination section 95 determines that the wheel loader 10 is in the scooping-up work state W3. This is because it is determined that the wheel loader 10 is performing the scooping-up work and that the ground is erroneously detected as an obstacle.

### <Operation>

Next, the control operation of the wheel loader 10 of the third embodiment will be described.

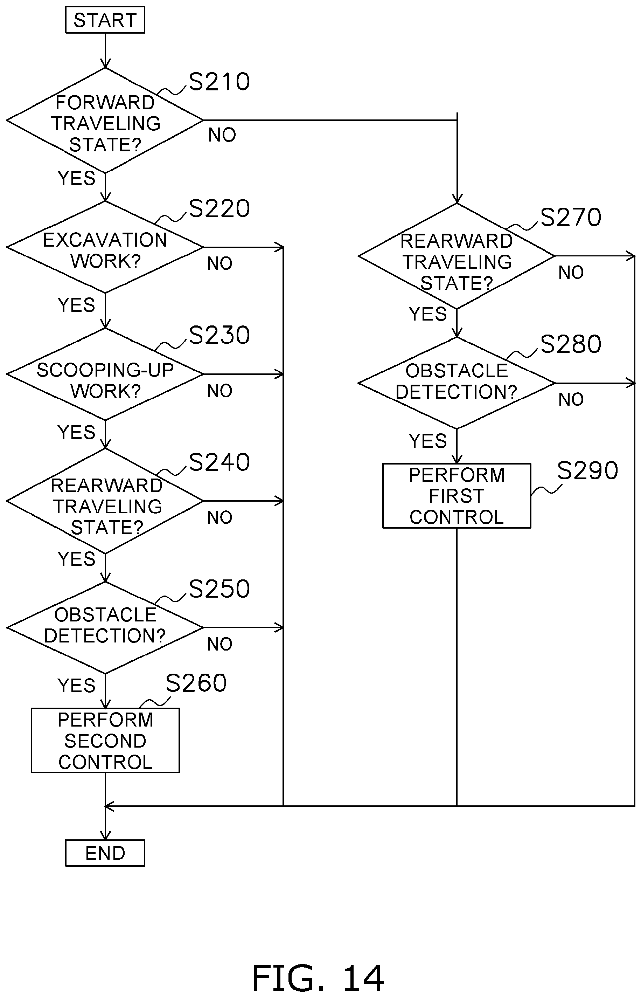

FIG. 14 is a flow chart showing a control operation of the wheel loader 10 in the third embodiment.

First, in step S210, the scooping-up determination section 95 determines whether or not the vehicle main body 1 is traveling forward. The scooping-up determination section 95 determines that the vehicle main body 1 is traveling forward (forward traveling state) using the front tire 4 or the rear tire 7 rotating forward or using the FNR lever 52 being in the forward position.

When it is determined in step S210 that the wheel loader is in the forward traveling state, in step S220, the scooping-up determination section 95 determines whether or not the wheel loader 10 is in the excavation work state W1. The scooping-up determination section 95 determines that the wheel loader 10 is in the excavation work state W1 when the condition (A) based on the boom bottom pressure and the condition (B) based on the boom angle are satisfied.

When the condition (A) and the condition (B) are satisfied in step S220 and it is determined that the wheel loader 10 is in the excavation work state W1, the scooping-up determination section 95 sets the excavation flag to ON, and the control proceeds to step S230.

In step S230, the scooping-up determination section 95 determines whether or not the wheel loader 10 is in the scooping-up work state W3. The scooping-up determination section 95 determines that the wheel loader 10 is in the scooping-up work state W3 when the condition (C) based on the boom angle is satisfied in the state in which the excavation flag is set to ON.

In step S230, when the condition (C) is satisfied and it is determined that the wheel loader 10 is in the scooping-up work state W3, the scooping-up determination section 95 sets the scooping-up flag to ON, and the control proceeds to step S240.

In step S240, the obstacle determination section 91 determines whether or not the wheel loader 10 is in the rearward traveling state. The obstacle determination section 91 determines that the wheel loader 10 is traveling rearward (rearward traveling state) either using the front tire 4 or the rear tire 7 rotating rearward or using the FNR lever 52 being in the reverse position.

When it is determined in step S240 that the vehicle is in the rearward traveling state, the control proceeds to step S250.

In step S250, the obstacle determination section 91 determines the existence of an obstacle. The obstacle determination section 91 determines that an obstacle exists by receiving the obstacle detection information within the predetermined range from the rear detection section 71 of the detection system 225.

When it is determined in step S250 that an obstacle exists, the decision section 93 decides to perform the second control, and the second control is performed in step S260.

In the second control of step S260 (an example of the control step), the notification instruction section 83 does not operate the alarm device 61, turns on the function OFF notification lamp 62, and the control ends. The controller 26 does not control the brake valve 41.

As a result, it is possible to determine that the ground G is detected as an obstacle and to stop the automatic braking function and the alarm device 61.

On the other hand, when it is not determined that the wheel loader 10 is the forward traveling state in step S210, the control proceeds to step S270. In step S270, the obstacle determination section 91 determines whether or not the wheel loader 10 is in the rearward traveling state. The obstacle determination section 91 determines that the wheel loader 10 is traveling rearward (rearward traveling state) either using the front tire 4 or the rear tire 7 rotating rearward or using the FNR lever 52 being in the reverse position.

When it is determined in step S270 that the wheel loader 10 is in the rearward traveling state, the control proceeds to step S280. In step S280, the obstacle determination section 91 determines the existence of an obstacle. When the obstacle determination section 91 determines that an obstacle exists by receiving the obstacle detection information within the predetermined range from the rear detection section 71 of the detection system 225.

When it is determined in step S280 that an obstacle exists, the decision section 93 decides to perform the first control, and the first control is performed in step S290.

In the first control of step S280 (an example of the control step), in the controller 26, the brake instruction section 82 stops the fuel supply to the engine 31. Then, the brake instruction section 82 operates the brake valve 41 to drive the service brake 42 and stop the vehicle main body 1. The notification instruction section 83 operates the alarm device 61 to notify the operator of the existence of an obstacle and the operation of the automatic braking, and the control ends.

When it is not determined in step S220 that the wheel loader 10 is in the excavation work state, the control ends without operating the braking system 22 and the notification system 24. When it is not determined in step S230 that the wheel loader 10 is in the scooping-up work state, the control ends without operating the braking system 22 and the notification system 24. When it is not determined in step S240 that the wheel loader 10 is in the rearward traveling state, the control ends without operating the braking system 22 and the notification system 24. When no obstacle is detected in step S250, the control ends without operating the braking system 22 and the notification system 24.

Further, in step S270, when it is not determined that the wheel loader 10 is in the rearward traveling state, the control ends without operating the braking system 22 and the notification system 24. Further, in step S280, when an obstacle is not detected, the control ends without operating the braking system 22 and the notification system 24.

### <Characteristics>

(1) The wheel loader 10 (an example of a work machine) of the present embodiment includes the vehicle main body 1, the rear detection section 71, the vehicle body angle sensor 72 (an example of an inclination state detection section), and the controller 26 (an example of a control section). The rear detection section 71 detects the obstacle (an example of an object) in the rear of the vehicle main body 1. The vehicle body angle sensor 72 detects the inclination state of the vehicle main body 1. The controller 26 determines the control corresponding to the detection of the rear detection section 71 based on the inclination state of the vehicle main body 1 detected by the vehicle body angle sensor 72.

As a result, since it is possible to prevent the ground G from being detected as the obstacle when the vehicle main body 1 is arranged in an inclined place due to for example, the scooping-up work and the like, it is possible to prevent erroneous detection of the obstacle. The control corresponding to the detection of the rear detection section 71 can be said to be a control for suppressing the approach to the obstacle S (an example of an object) in the rear during the rearward travel.

(2)
The wheel loader 10 (an example of a work machine) of the present embodiment further includes the alarm device 61 (an example of a first notification section). The alarm device 61 notifies that the rear detection section 71 has detected the obstacle (an example of an object) in the rear of the vehicle main body 1. The control corresponding to the rear detection of the rear detection section 71 includes the stop of the notification by the alarm device 61.

This makes it possible to prevent issuing an alarm notifying the existence of the obstacle by erroneously detecting the ground G as an obstacle.

(3)
The wheel loader 10 (an example of a work machine) of the present embodiment includes the vehicle main body 1, the rear detection section 71, the alarm device 61 (an example of a first notification section), and the controller 126 (an example of a control section). The rear detection section 71 detects the object in the rear of the vehicle main body 1 and measures the distance to the object in the rear of the vehicle main body 1. The alarm device 61 notifies that the rear detection section 71 has detected the object in the rear of the vehicle main body 1. The controller 126 changes the notification by the alarm device 61 based on the change in the distance from the vehicle main body 1 to the object measured by the rear detection section 71.

This makes it possible to prevent the ground G from being detected as an obstacle when the wheel loader 10 is performing, for example, the scooping-up work, and thus it is possible to prevent erroneous detection of an obstacle. Therefore, the alarm of the alarm device 61 can be stopped, for example, and the alarm due to erroneous detection can be reduced.

(4)
In the wheel loader 10 (an example of the work machine) of the present embodiment, the rear detection section 71 detects the object in the rear of the vehicle main body 1 when the vehicle main body 1 is traveling rearward. The rear detection section 71 detects that the vehicle main body 1 is traveling rearward using the front tire 4 (an example of a wheel)or the rear tire 7 (an example of a wheel) provided on the vehicle main body 1 rotating toward the rear, or using the FNR lever 52 (an example of the operating member) capable of setting the forward travel or the rearward travel of the vehicle main body 1 being set to the reverse position.

This makes it possible to detect that the vehicle main body 1 is traveling rearward.

(5)
In the wheel loader 10 (an example of a work machine) of the present embodiment, the control corresponding to the detection of the rear detection section 71 includes the automatic braking that automatically brakes the vehicle main body 1 when the obstacle (an example of an object) is detected by the rear detection section 71 and includes stopping of the automatic braking.

As a result, it is possible to prevent the automatic braking from operating and stopping the vehicle main body 1 by erroneously detecting the ground G as an obstacle S.

(6)
In the wheel loader 10 (an example of a work machine) of the present embodiment, when it is detected that the obstacle (an example of an object) exists in the rear of the vehicle main body 1 by the rear detection section 71 and when the inclination of the vehicle main body 1 is less than the predetermined threshold value, the controller 26 (an example of a control section) notifies the obstacle detection with the alarm device 61. When it is detected that the obstacle (an example of an object) exists in the rear of the vehicle main body 1 by the rear detection section 71 and when the inclination of the vehicle main body 1 is equal to or more than the predetermined threshold value, the controller 26 stops the notification of the alarm device 61 (an example of the first notification section).

This makes it possible to prevent the ground G from being erroneously detected as an obstacle and issuing an alarm when the vehicle main body 1 is arranged in an inclined place due to, for example, the scooping-up work.

(7)
In the wheel loader 10 (an example of a work machine) of the present embodiment, when the obstacle (an example of an object) is detected in the rear of the vehicle main body 1 by the rear detection section 71 and when the inclination of the vehicle main body 1 is less than the predetermined threshold value, the controller 26 (an example of a control section) operates the automatic braking. When the obstacle (an example of an object) is detected in the rear of the vehicle main body 1 by the rear detection section 71 and when the inclination of the vehicle main body 1 is equal to or more than the predetermined threshold value, the controller 26 (an example of a control section) stops the automatic braking.

This makes it possible to prevent the automatic braking from operating and stopping the vehicle main body 1 when the vehicle main body is arranged in an inclined place due to, for example, the scooping-up work.

(8)
The wheel loader 10 (an example of a work machine) of the present embodiment further includes the function OFF notification lamp 62 (an example of a second notification section). The function OFF notification lamp 62 notifies the stop of the automatic braking. When the controller 26 (an example of the control section) suppresses or stops the automatic braking, the controller 26 notifies the operator by the function OFF notification lamp 62.

This makes it possible for the operator to recognize that the automatic braking is being suppressed or stopped.

(9)
In the wheel loader 10 (an example of a work machine) of the present embodiment, the predetermined threshold value of the inclination is 15 °.

Thereby, it is possible to detect that the vehicle main body 1 is arranged on a steep slope such as a construction site.

(10)
In the wheel loader 10 (an example of a work machine) of the present embodiment, the controller 126 (an example of a control section) change the notification with the alarm device 61 (an example of the first notification section) when the distance to the object at the second point in time after the first point in time is longer than the distance to the object at the first point in time.

When the distance to the detected object becomes long, it is possible to determine that the wheel loader 10 is performing, for example, the scooping-up work.

(11)
In the wheel loader 10 (an example of a work machine) of the present embodiment, the controller 126 (an example of a control section) stops the automatic braking that automatically brakes the vehicle main body 1 when changing the notification with the alarm device 61 (an example of the first notification section).

As a result, it is possible to prevent the automatic braking from operating and stopping the vehicle main body 1 by erroneously detecting the ground G as the obstacle S.

(12)
The wheel loader 10 (an example of a work machine) of the present embodiment includes the vehicle body frame 2 (an example of a main body frame), a boom 14, a bucket 15, a bucket cylinder 17 (an example of an actuator), and a bell crank 18 (an example of a sub-link). The boom 14 is swingably attached to the front part of the vehicle body frame 2. The bucket 15 is connected to the boom 14 so that the opening 15b is arranged toward the front, and drives with respect to the boom 14. The bucket cylinder 17 drives the bucket 15. The bell crank 18 is attached to the boom 14 and transmits the driving force of the bucket cylinder 17 to the bucket 15.

As a result, in the wheel loader 10 including the front loading configuration, when the scooping-up work or the like is performed, it is possible to reduce an alarm due to the erroneous detection that the alarm device 61 operates by erroneously detecting the ground G as an obstacle S.

(13)
The method for controlling the wheel loader 10 (an example of a work machine) of the present embodiment includes step S10 (an example of a rear detection step), step S11 (an example of an inclination state detection step), and steps S12 (an example of a control step) and S13 (an example of a control step). Step S10 detects the obstacle (an example of an object) in the rear of the vehicle main body 1. Step S11 detects the inclination state of the vehicle main body 1. Steps S12 and S13 determine the control corresponding to the detection in step S10 based on the inclination state of the vehicle main body 1 detected in step S11.

As a result, since it is possible to prevent the ground G from being detected as an obstacle when the vehicle main body 1 is arranged in an inclined place due to for example, the scooping-up work and the like, it is possible to prevent erroneous detection of the obstacle.
(14)
   The method for controlling the wheel loader 10 (an example of a work machine) of the present embodiment includes step S10 (an example of a rear detection step), step S111 (an example of a distance change determination step), and steps S12 (an example of a control step) and S13 (an example of a control step). Step S10 detects the obstacle (an example of an object) in the rear of the vehicle main body 1. Step S11 determines the change in the measured distance from the vehicle main body 1 to the obstacle. Steps S12 and S13 change the notification that the object has been detected in the rear of the vehicle main body 1 based on the change in the distance detected in step S111.
(15)
   The wheel loader 10 (an example of a work machine) of the present embodiment includes the vehicle main body 1, the rear detection section 71, and the controller 226 (an example of a control section). The vehicle main body 1 includes the vehicle body frame 2, the front tire 4, the rear tire 7 (an example of a traveling unit), and the work implement 3 arranged in front of the vehicle body frame 2. The rear detection section 71 detects the obstacle (an example of an object) in the rear of the vehicle main body 1. The controller 226 (an example of the control section) determines whether or not the wheel loader 10 is in the scooping-up state based on the operation of the work implement 3 during the forward travel by driving the traveling unit and changes the control that suppresses the approach of the object during the rearward travel based on the determination about the scooping-up work state.

As a result, when the vehicle main body 1 is arranged in an inclined place due to the scooping-up work, it is possible to prevent the ground G from being detected as an obstacle, so that it is possible to prevent erroneous detection of the obstacle.

(16)
In the wheel loader 10 (an example of a work machine) of the present embodiment, the work implement 3 includes the boom 14, the bucket 15, and the lift cylinder 16 (an example of a boom cylinder). The boom 14 is swingably attached to the front part of the vehicle body frame 2. The bucket 15 is connected to the boom 14 so that the opening is arranged toward the front, and drives with respect to the boom 14. The lift cylinder 16 drives the boom 14. The wheel loader 10 further includes the boom bottom pressure sensor 74 and the boom angle sensor 73 (an example of a work implement height detection section). The boom bottom pressure sensor 74 detects the bottom pressure of the lift cylinder 16. The boom angle sensor 73 detects the angle θ of the boom 14. The controller 226 determines whether or not the wheel loader 10 is in the scooping-up state based on the bottom pressure of the lift cylinder 16 and the height of the work implement 3.

In this way, by detecting the angle θ of the boom 14 and the bottom pressure of the lift cylinder 16, it is possible to determine whether or not the wheel loader 10 is in the scooping-up state.

(17)
In the wheel loader 10 (an example of a work machine) of the present embodiment, the controller determines that the wheel loader 10 is in the excavation work state when the bottom pressure of the lift cylinder 16 (an example of a boom cylinder) is equal to or more than the first threshold value and the height of the work implement 3 is equal to or less than the second threshold value, and determines that the wheel loader 10 is in the scooping-up work state when the height of the work implement 3 is more than the third threshold value during the determination of the excavation work state. The second threshold value and the third threshold value are set so that the height of work implement 3 at the third threshold value is higher than the height of work implement 3 at the second threshold value.

In this way, by detecting the height of work implement 3 and the bottom pressure of the lift cylinder 16, it is possible to determine whether or not the wheel loader 10 is in the excavation work state, and determine whether or not the excavation work is the scooping-up work state based on the height of the work implement 3 under the determination that the wheel loader 10 is in the excavation work state. This is because the height of the work implement 3 during the scooping-up work is located higher the height of the work implement 3 during normal excavation, so it is possible to distinguish between the scooping-up work state and the state other than the scooping-up work in the excavation work state.

(18)
The wheel loader 10 (an example of a work machine) of the present embodiment includes the boom angle sensor 73 that detects the angle of the boom 14. The second threshold value and the third threshold value are set as the angle of the boom 14.

In this way, by detecting the angle of the boom 14 and the bottom pressure of the lift cylinder 16, it is possible to determine whether or not the wheel loader 10 is in the excavation work state, and determine whether or not the excavation work is the scooping-up work state based on the angle of the boom 14 under the determination that the wheel loader 10 is in the excavation work state. This is because the boom 14 rotates upward during the scooping-up work as compared with normal excavation, so it is possible to distinguish between the scooping-up work state and the state other than the scooping-up work in the excavation work state.

(19)
In the wheel loader 10 (an example of a work machine) of the present embodiment, the controller 226 (an example of a control section) determines whether or not the wheel loader 10 is in the excavation work state during the forward travel. The controller 226 determines that the wheel loader 10 is traveling forward using the front tire 4 (an example of a wheel) or the rear tire 7 (an example of a wheel) rotating forward or using the FNR lever 52 (an example of an operating member) capable of setting the forward travel or the rearward travel of the vehicle main body 1 being set to the forward position.

Thereby, the forward travel of the vehicle main body 1 can be detected.

(20)
The wheel loader 10 (an example of a work machine) of the present embodiment further includes the alarm device 61 (an example of a first notification section). The alarm device 61 notifies that the rear detection section 71 has detected the obstacle (an example of an object) in the rear of the vehicle main body 1. The control of suppressing the approach to the obstacle S (an example of an object) in the rear during the rearward travel includes the stop of the notification by the alarm device 61.

This makes it possible to prevent the ground G from being erroneously detected as an obstacle and issuing an alarm.

(21)
The method for controlling the wheel loader 10 (an example of a work machine) of the present embodiment includes steps S220 and S230 (an example of a scooping-up determination step), steps S250 and S280 (an example of a rear detection step), and step S260. S290 (an example of a control step). S220 and S230 determine whether or not the wheel loader 10 is in the scooping-up work state based on the operation of the work implement 3 during the forward travel by driving a traveling unit of the vehicle main body 1 including the traveling unit and the work implement 3. Steps S250 and S280 detect the obstacle (an example of an object) in the rear of the vehicle main body 1. Steps S260 and S290 change the control that suppresses the approach of the obstacle (an example of object) during the rearward travel based on the determination about the scooping-up work state.

As a result, when the vehicle main body 1 is arranged in an inclined place due to the scooping-up work, it is possible to prevent the ground G from being detected as an obstacle, so that it is possible to prevent erroneous detection of the obstacle.

### <Other embodiments>

Although one embodiment of the present invention has been described above, the present invention is not limited to the above embodiment, and various modifications can be made without desectioning from the invention.
(A) In the above embodiment, the function of the automatic braking is stopped as shown in the second control of step S13, but the function is not limited to the stop, and By setting the opening degree of the brake valve 41 smaller than that in the first control, the control may be performed so as to activate a weak braking force weaker than the braking force in the automatic braking. This weak brake corresponds to an example of suppression of automatic braking. At this time, the suppression of the automatic braking may be notified by the function OFF notification lamp 62.

The weak braking force may be generated by performing the control performed when the operator turns off the accelerator 51 instead of the control of adjusting the opening degree of the brake valve 41. When the operator turns off the accelerator 51, the fuel supply to the engine 31 is stopped, the swash plates of the pump 32a and the motor 32b are controlled to be a traveling resistance, and the weak braking force is activated. That is, the brake instruction section 82 may stop the fuel supply to the engine 31 and control the swash plate of the pump 32a and the motor 32b so as to be a traveling resistance.

Further, not only the control when the accelerator is turned off but also the control when the FNR lever 52 is operated so as to be in the neutral position may be used to activate the weak braking force. When the FNR lever 52 is in the neutral position, the controller 26 controls the solenoids 32d and 32e, and moves the swash plate of the pump 32a and the motor 32b so as to be a traveling resistance. That is, the brake instruction section 82 may stop the fuel supply to the engine 31 and control the swash plate of the pump 32a and the motor 32b so as to be a traveling resistance.

As a result, a braking force works to generate a weak braking force. It should be noted that the neutral type can obtain a larger braking force than the accelerator 51 is simply turned off.

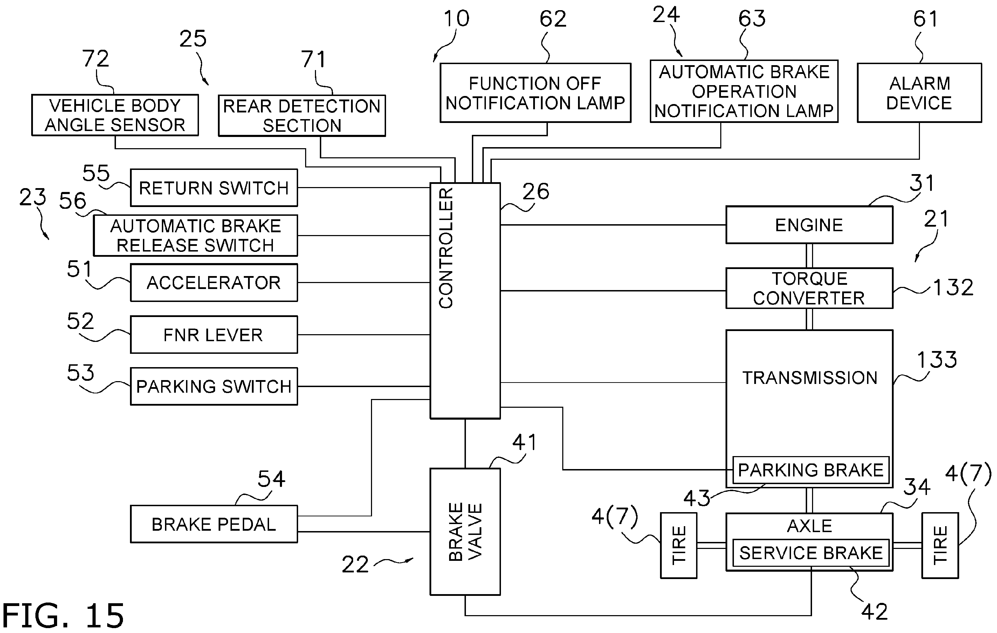

(B)
In the above embodiment, the HST 32 is used for the drive system 21, but it is not limited to the HST and may be a torque converter. FIG. 15 is a block diagram showing a configuration in which the torque converter 132 and the transmission 133 are provided in the drive system 21. The driving force from the engine 31 is transmitted to the transmission 133 via the torque converter 132. The transmission 133 shifts the rotational driving force of the engine 31 transmitted via the torque converter 132 and transmits it to the axle 34. The transmission 133 is provided with a parking brake 43.

When the torque converter is provided, in order to generate the weak braking force described in (A) above, the opening degree of the brake valve 41 may be set small in the same manner as described above. Further, although the braking force is weaker than that of the HST, only the control to turn off the accelerator 51 may be performed. When the preset braking force is generated, the opening degree of the brake valve 41 may be increased or the parking brake 43 may be used, as in the above embodiment.

Further, not limited to HST, HMT (Hydro Mechanical Transmission) may be used.
(C)
   In the above embodiment, in the second control, the automatic brake is not operated and the alarm device 61 is not operated, but for example, only the alarm device 61 may be operated. Further, only the automatic brake may be operated, or both the automatic brake and the alarm device 61 may be operated. When both are operated, unlike the first control, in the second control the braking force of the automatic braking is suppressed, the volume of the alarm of the alarm device 61 is suppressed and the like.
(D)
   The wheel loader 10 of the above embodiment includes the automatic braking function. In this case, in the first control, the automatic brake is not be operated and the alarm device 61 is operated. Further, in the second control, the alarm device 61 is not operated.
(E)
   In the above embodiment, as an example of the change of the notification by the alarm device 61, the alarm by the alarm device 61 is stopped in the second control, but the present invention is not limited to this, and the volume of the alarm may be suppressed and the output form of the alarm may be changed. Changing the output form of the alarm means, for example, changing the notification by sound to the notification by light.
(F)
   For the control of the braking force, a service brake 42, a parking brake 43, and other means for changing the braking force can be appropriately applied.
(G)
   In the third embodiment, when the scooping-up work state W3 is determined in step S210, the second control is performed in step S215 after detecting the obstacle in step S214. This is because, as the second control, when weakening the braking with the automatic braking or the volume of the alarm, it is necessary to detect an obstacle, but only when the function of the automatic braking and the alarm are stopped and the function OFF notification lamp 62 is turned on, the control can be performed after the scooping-up work state is determined regardless of whether or not an obstacle is detected.
(H)
   In the first embodiment, after the obstacle is detected in step S10, it is determined in step S11 whether the inclination angle is equal to or larger than the predetermined threshold value, but step S11 may be performed before step S10.
(I)
   The wheel loader of the above embodiment may be operated by an operator on board, or may be operated unattended.
(J)
   In the above embodiment, the wheel loader has been described as an example of the work machine, but the present invention is not limited to this, and a forklift or the like may be used.

### INDUSTRIAL APPLICABILITY

According to the work machine and the method for controlling the work machine of the present disclosure, an effect capable of reducing an alarm due to false detection is exhibited, and it is useful as a bulldozer, a wheel loader, or the like.

## Claims

1. A work machine (10) comprising:
a vehicle main body (1) including a traveling unit (2, 4, 7) and a work implement (3) arranged in front of the traveling unit (2, 4, 7);
a rear detection section (71) configured to detect an object (S) in rear of the vehicle main body (1); **characterized by**
a control section (26, 126, 226) configured to determine whether or not the work machine (10) is in a scooping-up work state (W3) based on an operation of the work implement (3) during forward travel by driving the traveling unit (2, 4, 7), the control section (26, 126, 226) being configured to change control of suppressing approach to the object (S) during rearward travel, based on a determination about the scooping-up work state (W3);
wherein the control corresponding to the detection of the rear detection section (71) includes an automatic braking that automatically brakes the vehicle main body (1) when the object (S) is detected by the rear detection section (71), suppression of braking force of the automatic braking, or stop of the automatic braking;
wherein the work machine further includes a second notification section (62) configured to notify suppression of braking force of the automatic braking or stop of the automatic braking, and
wherein the control section (26, 126, 226) is configured to notify an operator by the second notification section (62) when suppressing the braking force of the automatic braking or stopping the automatic braking.

2. The work machine (10) according to claim 1, wherein
the work implement (3) includes
a boom (14) attached to a front part of the traveling unit (2, 4, 7) swingably,
a bucket (15) connected to the boom (14) so that an opening (15b) is arranged toward front, the bucket (15) driving with respect to the boom (14),
a boom (14) cylinder configured to drive the boom (14),
a boom bottom pressure sensor (74) configured to detect a bottom pressure of the boom (14) cylinder, and
a work implement (3) height detection section configured to detect a height of the work implement (3), and
the control section (26, 126, 226) configured to determine whether or not the work machine (10) is in the scooping-up work state (W3), based on the bottom pressure of the boom (14) cylinder and the height of the work implement (3).

3. The work machine according to claim 2, wherein
the control section (26, 126, 226) is configured to determine that the work machine (10) is in an excavation work state (W1) when the bottom pressure of the boom (14) cylinder is equal to or more than a first threshold value and the height of the work implement (3) is equal to or less than a second threshold value, and determine that the work machine (10) is in the scooping-up work state (W3) when the height of the work implement (3) is more than a third threshold value during detection of the excavation work state (W1), and
the second threshold value and the third threshold vale are set so that the height of the work implement (3) at the third threshold value is higher than the height of the work implement (3) at the second threshold value.

4. The work machine (10) according to claim 3, wherein
the work implement (3) height detection section (73) includes a boom angle sensor (73) configured to detect an angle of the boom (14), and
the second threshold value and the third threshold value are set as the boom (14) angle.

5. The work machine (10) according to claim 3, wherein
the control section (26, 126, 226) is configured to determine whether or not the work machine (10) is in the excavation work state (W1) during the forward travel, and
the control section (26, 126, 226) is configured to determine that the work machine (10) travels forward using wheels (4, 7) of the vehicle main body (1) rotating to travel forward or using an operating member (52) capable of setting the forward travel or the rearward travel of the vehicle main body (1) being set in a forward position.

6. The work machine (10) according to claim 1, further comprising
a first notification section (61) configured to notify that the object (S) is detected in the rear of the vehicle main body (1) by the rear detection section (71),
wherein the control of suppressing the approach to the object (S) in the rear during the rearward travel includes change of notification by the first notification section (61).

7. A method for controlling a work machine (10) having a vehicle main body (1) including a traveling unit (2, 4, 7) and a work implement (3) arranged in front of the traveling unit (2, 4, 7), the method comprising:
a rear detection step (S10) of detecting an object (S) in rear of the vehicle main body (1); **characterized by**
a scooping-up determination step of determining a scooping-up work state (W3) based on an operation of the work implement (3) when traveling forward by driving of a traveling unit (2, 4, 7) of the vehicle main body (1) including the traveling unit (2, 4, 7) and the work implement (3);
a control step (S12) of changing control of suppressing approach to the object (S) in the rear during rearward travel, based on determination about the scooping-up work state (W3);
wherein the control corresponding to the detection of the rear detection section (71) includes an automatic braking that automatically brakes the vehicle main body (1) when the object (S) is detected by the rear detection section (71), suppression of braking force of the automatic braking, or stop of the automatic braking;
wherein the work machine further includes a second notification section (62) configured to notify suppression of braking force of the automatic braking or stop of the automatic braking, and
wherein the control step includes notifying an operator when suppressing the braking force of the automatic braking or stopping the automatic braking.

8. The work machine (10) according to claim 6, wherein
the change of the notification by the first notification section (61) includes stopping the notification, suppressing volume of the notification, or changing an output form of the notification.

9. The work machine (10) according to any one of claims 1 to 6 or 8, wherein
the rear detection section (71) detects the object (S) in the rear of the vehicle main body (1) when the vehicle main body (1) travels rearward, and
the rear detection section (71) detects that the vehicle main body (1) travels rearward using wheels (4, 7) provided to the vehicle main body (1) rotating toward the rear or using an operating member (52) capable of setting forward travel or rearward travel of the vehicle main body (1) being set to a reverse position.

10. The work machine (10) according to claim 1, wherein
the control section (26, 126, 226) is configured to activate the automatic braking when the object (S) is detected in the rear of the vehicle main body (1) by the rear detection section (71) and when an inclination of the vehicle main body (1) is less than a predetermined threshold value, and
to suppress the automatic braking or stop the automatic braking when the object (S) is detected in the rear of the vehicle main body (1) by the rear detection section (71) and when the inclination of the vehicle main body (1) is equal to or more than a predetermined threshold value, wherein preferably the predetermined threshold value of the inclination is 15 °.

11. The work machine (10) according to any one of claims 1 to 6, 8, 9 or 10, wherein
the work machine (10) is a wheel loader, and
the work machine (10) includes,
main body frame (2),
a boom (14) attached swingably on a front part of the main body frame (2),
a bucket (15) connected to the boom (14) so that an opening (15b) is arranged toward front, the bucket (15) driving with respect to the boom (14),
an actuator (17) configured to drive the bucket (15), and
a sub-link (18) attached to the boom (14), the sub-link (18) transmitting driving force of the actuator (17) to the bucket (15).

## Patentansprüche

1. Arbeitsmaschine (10) umfassend:
einen Fahrzeughauptkörper (1) mit einer Fahreinheit (2, 4, 7) und einem Arbeitsgerät (3), das vor der Fahreinheit (2, 4, 7) angeordnet ist;
einen hinteren Erfassungsabschnitt (71), der so konfiguriert ist, dass er ein Objekt (S) hinter dem Fahrzeughauptkörper (1) erfasst; **gekennzeichnet durch**
einen Steuerabschnitt (26, 126, 226), der so konfiguriert ist, dass er auf der Grundlage eines Betriebs des Arbeitsgeräts (3) während der Vorwärtsfahrt durch Antreiben der Fahreinheit (2, 4, 7) bestimmt, ob sich die Arbeitsmaschine (10) in einem Aufschaufelungsarbeitszustand (W3) befindet oder nicht, wobei der Steuerabschnitt (26, 126, 226) so konfiguriert ist, dass er die Steuerung zur Unterdrückung der Annäherung an das Objekt (S) während der Rückwärtsfahrt auf der Grundlage einer Bestimmung über den Aufschaufelungsarbeitszustand (W3) ändert;
wobei die Steuerung entsprechend der Erfassung durch den hinteren Erfassungsabschnitt (71) eine automatische Bremsung, die den Fahrzeughauptkörper (1) automatisch abbremst, wenn das Objekt (S) durch den hinteren Erfassungsabschnitt (71) erfasst wird, eine Unterdrückung der Bremskraft der automatischen Bremsung oder ein Anhalten der automatischen Bremsung umfasst;
wobei die Arbeitsmaschine ferner einen zweiten Benachrichtigungsabschnitt (62) umfasst, der so konfiguriert ist, dass er die Unterdrückung der Bremskraft der automatischen Bremsung oder das Stoppen der automatischen Bremsung benachrichtigt, und
wobei der Steuerabschnitt (26, 126, 226) so konfiguriert ist, dass er einen Bediener mittels des zweiten Benachrichtigungsabschnitts (62) benachrichtigt, wenn die Bremskraft der automatischen Bremsung unterdrückt oder die automatische Bremsung gestoppt wird.

2. Arbeitsmaschine (10) gemäß Anspruch 1, wobei
das Arbeitsgerät (3) umfasst
einen Ausleger (14), der schwenkbar an einem vorderen Teil der Fahreinheit (2, 4, 7) angebracht ist,
eine Schaufel (15), die mit dem Ausleger (14) verbunden ist, so dass eine Öffnung (15b) nach vorne ausgerichtet ist, wobei die Schaufel (15) in Bezug auf den Ausleger (14) angetrieben wird,
einen Auslegerzylinder (14), der zum Antreiben des Auslegers (14) konfiguriert ist,
einen Auslegerbodendrucksensor (74), der zum Erfassen eines Bodendrucks des Auslegerzylinders (14) konfiguriert ist, und
einen Arbeitsgerät-Höhenerkennungsabschnitt (3), der so konfiguriert ist, dass er eine Höhe des Arbeitsgeräts (3) erkennt, und
wobei der Steuerabschnitt (26, 126, 226) so konfiguriert ist, dass er auf der Grundlage des Bodendrucks des Auslegerzylinders (14) und der Höhe des Arbeitsgeräts (3) bestimmt, ob sich die Arbeitsmaschine (10) im Aufschaufelungsarbeitszustand (W3) befindet oder nicht.

3. Arbeitsmaschine gemäß Anspruch 2, wobei
der Steuerabschnitt (26, 126, 226) so konfiguriert ist, dass er feststellt, dass sich die Arbeitsmaschine (10) in einem Aushubarbeitszustand (W1) befindet, wenn der Bodendruck des Auslegerzylinders (14) gleich oder größer als ein erster Schwellenwert ist und die Höhe des Arbeitsgeräts (3) gleich oder kleiner als ein zweiter Schwellenwert ist, und um zu bestimmen, dass sich die Arbeitsmaschine (10) im Aufschaufelungsarbeitszustand (W3) befindet, wenn die Höhe des Arbeitsgeräts (3) während der Erkennung des Aushubarbeitszustands (W1) größer als ein dritter Schwellenwert ist, und
der zweite Schwellenwert und der dritte Schwellenwert so eingestellt sind, dass die Höhe des Arbeitsgeräts (3) beim dritten Schwellenwert höher ist als die Höhe des Arbeitsgeräts (3) beim zweiten Schwellenwert.

4. Arbeitsmaschine (10) nach Anspruch 3, wobei
der Arbeitsgerät-Höhenerkennungsabschnitt (73) einen Auslegerwinkelsensor (73) umfasst, der so konfiguriert ist, dass er einen Winkel des Auslegers (14) erkennt, und
der zweite Schwellenwert und der dritte Schwellenwert als der Auslegerwinkel (14) eingestellt sind.

5. Arbeitsmaschine (10) gemäß Anspruch 3, wobei
der Steuerabschnitt (26, 126, 226) so konfiguriert ist, dass er bestimmt, ob sich die Arbeitsmaschine (10) während der Vorwärtsfahrt im Aushubarbeitszustand (W1) befindet oder nicht, und
der Steuerabschnitt (26, 126, 226) so konfiguriert ist, dass er feststellt, dass sich die Arbeitsmaschine (10) vorwärts bewegt, indem sich die Räder (4, 7) des Fahrzeughauptkörpers (1) drehen, um sich vorwärts zu bewegen, oder indem ein Betätigungselement (52), das die Vorwärtsfahrt oder die Rückwärtsfahrt des Fahrzeughauptkörpers (1) einstellen kann, in eine Vorwärtsposition gebracht wird.

6. Arbeitsmaschine (10) gemäß Anspruch 1, die ferner umfasst
einen ersten Benachrichtigungsabschnitt (61), der so konfiguriert ist, dass er benachrichtigt, dass das Objekt (S) im hinteren Bereich des Fahrzeughauptkörpers (1) durch den hinteren Erfassungsabschnitt (71) erfasst wird,
wobei die Steuerung zum Unterdrücken der Annäherung an das Objekt (S) im hinteren Bereich während der Rückwärtsfahrt eine Änderung der Benachrichtigung durch den ersten Benachrichtigungsabschnitt (61) umfasst.

7. Verfahren zum Steuern einer Arbeitsmaschine (10) mit einem Fahrzeughauptkörper (1), der eine Fahreinheit (2, 4, 7) und ein vor der Fahreinheit (2, 4, 7) angeordnetes Arbeitsgerät (3) umfasst, wobei das Verfahren umfasst:
einen Heckdetektionsschritt (S10) zum Detektieren eines Objekts (S) hinter dem Fahrzeughauptkörper (1); **gekennzeichnet durch**
einen Aufschaufelungsbestimmungsschritt zum Bestimmen eines Aufschaufelungsarbeitszustands (W3) auf der Grundlage eines Betriebs des Arbeitsgeräts (3) beim Vorwärtsfahren durch Antreiben einer Fahreinheit (2, 4, 7) des Fahrzeughauptkörpers (1), der die Fahreinheit (2, 4, 7) und das Arbeitsgerät (3) umfasst;
einen Steuerungsschritt (S12) zum Ändern der Steuerung der Unterdrückung der Annäherung an das Objekt (S) im hinteren Bereich während der Rückwärtsfahrt, basierend auf der Bestimmung bezüglich des Aufschaufelungsarbeitszustands (W3);
wobei die Steuerung entsprechend der Erfassung durch den hinteren Erfassungsabschnitt (71) eine automatische Bremsung, die den Fahrzeughauptkörper (1) automatisch abbremst, wenn das Objekt (S) durch den hinteren Erfassungsabschnitt (71) erfasst wird, eine Unterdrückung der Bremskraft der automatischen Bremsung oder ein Stoppen der automatischen Bremsung umfasst;
wobei die Arbeitsmaschine ferner einen zweiten Benachrichtigungsabschnitt (62) umfasst, der so konfiguriert ist, dass er die Unterdrückung der Bremskraft der automatischen Bremsung oder das Stoppen der automatischen Bremsung benachrichtigt, und
wobei der Steuerungsschritt das Benachrichtigen eines Bedieners beim Unterdrücken der Bremskraft der automatischen Bremsung oder beim Stoppen der automatischen Bremsung umfasst.

8. Arbeitsmaschine (10) gemäß Anspruch 6, wobei
die Änderung der Benachrichtigung durch den ersten Benachrichtigungsabschnitt (61) das Beenden der Benachrichtigung, das Unterdrücken der Lautstärke der Benachrichtigung oder das Ändern einer Ausgabeform der Benachrichtigung umfasst.

9. Arbeitsmaschine (10) gemäß einem der Ansprüche 1 bis 6 oder 8, wobei
der hintere Erfassungsabschnitt (71) das Objekt (S) hinter dem Fahrzeughauptkörper (1) erfasst, wenn sich der Fahrzeughauptkörper (1) rückwärts bewegt, und
der hintere Erfassungsabschnitt (71) erkennt, dass sich der Fahrzeughauptkörper (1) rückwärts bewegt, indem die am Fahrzeughauptkörper (1) vorgesehenen Räder (4, 7) sich nach hinten drehen oder indem ein Betätigungselement (52), das die Vorwärts- oder Rückwärtsbewegung des Fahrzeughauptkörpers (1) einstellen kann, in eine Rückwärtsposition gebracht ist.

10. Arbeitsmaschine (10) gemäß Anspruch 1, wobei
der Steuerabschnitt (26, 126, 226) so konfiguriert ist, dass er die automatische Bremsung aktiviert, wenn das Objekt (S) hinter dem Fahrzeughauptkörper (1) durch den hinteren Erfassungsabschnitt (71) erkannt wird und wenn eine Neigung des Fahrzeughauptkörpers (1) kleiner als ein vorbestimmter Schwellenwert ist, und
die automatische Bremsung unterdrückt oder die automatische Bremsung stoppt, wenn das Objekt (S) durch den hinteren Erfassungsabschnitt (71) hinter dem Fahrzeughauptkörper (1) erkannt wird und wenn die Neigung des Fahrzeughauptkörpers (1) gleich oder größer als ein vorbestimmter Schwellenwert ist, wobei der vorbestimmte Schwellenwert der Neigung vorzugsweise 15° beträgt.

11. Arbeitsmaschine (10) gemäß einem der Ansprüche 1 bis 6, 8, 9 oder 10, wobei
die Arbeitsmaschine (10) ein Radlader ist und
die Arbeitsmaschine (10) umfasst
einen Hauptkörperrahmen (2),
einen Ausleger (14), der schwenkbar an einem vorderen Teil des Hauptkörperrahmens (2) angebracht ist,
eine Schaufel (15), die mit dem Ausleger (14) verbunden ist, sodass eine Öffnung (15b) nach vorne ausgerichtet ist, wobei die Schaufel (15) in Bezug auf den Ausleger (14) angetrieben wird,
einem Aktuator (17), der zum Antreiben der Schaufel (15) konfiguriert ist, und
einem am Ausleger (14) befestigten Unterglied (18), wobei das Unterglied (18) die Antriebskraft des Aktuators (17) auf die Schaufel (15) überträgt.

## Revendications

1. Machine de travail (10) comprenant :
un corps principal de véhicule (1) comprenant une unité de déplacement (2, 4, 7) et un outil de travail (3) disposé à l'avant de l'unité de déplacement (2, 4, 7) ;
une section de détection arrière (71) configurée pour détecter un objet (S) à l'arrière du corps principal du véhicule (1) ; **caractérisée par**
une section de commande (26, 126, 226) configurée pour déterminer si la machine de travail (10) est ou non dans un état de travail de ramassage (W3) sur la base d'un fonctionnement de l'outil de travail (3) pendant un déplacement vers l'avant en entraînant l'unité de déplacement (2, 4, 7), la section de commande (26, 126, 226) étant configurée pour modifier la commande de suppression de l'approche de l'objet (S) pendant la marche arrière, sur la base d'une détermination de l'état de travail de ramassage (W3) ;
dans lequel la commande correspondant à la détection de la section de détection arrière (71) comprend un freinage automatique qui freine automatiquement le corps principal du véhicule (1) lorsque l'objet (S) est détecté par la section de détection arrière (71), la suppression de la force de freinage du freinage automatique, ou l'arrêt du freinage automatique ;
dans lequel la machine de travail comprend en outre une deuxième section de notification (62) configurée pour notifier la suppression de la force de freinage du freinage automatique ou l'arrêt du freinage automatique, et
dans laquelle la section de commande (26, 126, 226) est configurée pour notifier un opérateur par la deuxième section de notification (62) lors de la suppression de la force de freinage du freinage automatique ou de l'arrêt du freinage automatique.

2. La machine de travail (10) selon la revendication 1, dans laquelle
l'outil de travail (3) comprend
une flèche (14) fixée de manière pivotante à une partie avant de l'unité de déplacement (2, 4, 7),
un godet (15) relié à la flèche (14) de telle sorte qu'une ouverture (15b) soit disposée vers l'avant, le godet (15) entraînant la flèche (14),
un vérin de flèche (14) configuré pour entraîner la flèche (14),
un capteur de pression inférieure de flèche (74) configuré pour détecter une pression inférieure du vérin de flèche (14), et
une section de détection de hauteur d'outil de travail (3) configurée pour détecter une hauteur de l'outil de travail (3), et
la section de commande (26, 126, 226) configurée pour déterminer si la machine de travail (10) est ou non dans l'état de travail de ramassage (W3), sur la base de la pression inférieure du vérin de la flèche (14) et de la hauteur de l'outil de travail (3).

3. La machine de travail selon la revendication 2, dans laquelle
la section de commande (26, 126, 226) est configurée pour déterminer que la machine de travail (10) est dans un état de travail d'excavation (W1) lorsque la pression inférieure du vérin de la flèche (14) est égale ou supérieure à une première valeur seuil et que la hauteur de l'outil de travail (3) est égale ou inférieure à une deuxième valeur seuil, et déterminer que la machine de travail (10) est dans l'état de travail de ramassage (W3) lorsque la hauteur de l'outil de travail (3) est supérieure à une troisième valeur seuil pendant la détection de l'état de travail d'excavation (W1), et
la deuxième valeur seuil et la troisième valeur seuil sont réglées de telle sorte que la hauteur de l'outil de travail (3) à la troisième valeur seuil soit supérieure à la hauteur de l'outil de travail (3) à la deuxième valeur seuil.

4. La machine de travail (10) selon la revendication 3, dans laquelle
la section de détection de la hauteur de l'outil de travail (3) (73) comprend un capteur d'angle de flèche (73) configuré pour détecter un angle de la flèche (14), et
la deuxième valeur seuil et la troisième valeur seuil sont définies comme l'angle de la flèche (14).

5. La machine de travail (10) selon la revendication 3, dans laquelle
la section de commande (26, 126, 226) est configurée pour déterminer si la machine de travail (10) est ou non dans l'état de travail d'excavation (W1) pendant la marche avant, et
la section de commande (26, 126, 226) est configurée pour déterminer que la machine de travail (10) avance en utilisant les roues (4, 7) du corps principal du véhicule (1) tournant pour avancer ou en utilisant un élément de commande (52) capable de régler la marche avant ou la marche arrière du corps principal du véhicule (1) étant réglé dans une position avant.

6. La machine de travail (10) selon la revendication 1, comprenant en outre
une première section de notification (61) configurée pour notifier que l'objet (S) est détecté à l'arrière du corps principal du véhicule (1) par la section de détection arrière (71),
dans laquelle la commande de suppression de l'approche de l'objet (S) à l'arrière pendant le déplacement vers l'arrière comprend un changement de notification par la première section de notification (61).

7. Procédé de commande d'une machine de travail (10) comportant un corps principal de véhicule (1) comprenant une unité de déplacement (2, 4, 7) et un outil de travail (3) disposé à l'avant de l'unité de déplacement (2, 4, 7), le procédé comprenant :
une étape de détection arrière (S10) consistant à détecter un objet (S) à l'arrière du corps principal du véhicule (1) ; **caractérisé par**
une étape de détermination de ramassage consistant à déterminer un état de travail de ramassage (W3) sur la base d'un fonctionnement de l'outil de travail (3) lors d'un déplacement vers l'avant par la conduite d'une unité de déplacement (2, 4, 7) du corps principal du véhicule (1) comprenant l'unité de déplacement (2, 4, 7) et l'outil de travail (3) ;
une étape de commande (S12) consistant à modifier la commande de suppression de l'approche de l'objet (S) situé à l'arrière pendant le déplacement vers l'arrière, sur la base de la détermination de l'état de travail de ramassage (W3) ;
dans laquelle la commande correspondant à la détection de la section de détection arrière (71) comprend un freinage automatique qui freine automatiquement le corps principal du véhicule (1) lorsque l'objet (S) est détecté par la section de détection arrière (71), la suppression de la force de freinage du freinage automatique, ou l'arrêt du freinage automatique ;
dans lequel la machine de travail comprend en outre une deuxième section de notification (62) configurée pour notifier la suppression de la force de freinage du freinage automatique ou l'arrêt du freinage automatique, et
dans lequel l'étape de commande comprend la notification à un opérateur lors de la suppression de la force de freinage du freinage automatique ou de l'arrêt du freinage automatique.

8. La machine de travail (10) selon la revendication 6, dans laquelle
le changement de notification par la première section de notification (61) comprend l'arrêt de la notification, la suppression du volume de la notification ou la modification d'une forme de sortie de la notification.

9. La machine de travail (10) selon l'une quelconque des revendications 1 à 6 ou 8, dans laquelle
la section de détection arrière (71) détecte l'objet (S) à l'arrière du corps principal du véhicule (1) lorsque le corps principal du véhicule (1) se déplace vers l'arrière, et
la section de détection arrière (71) détecte que le corps principal du véhicule (1) se déplace vers l'arrière à l'aide des roues (4, 7) prévues sur le corps principal du véhicule (1) tournant vers l'arrière ou à l'aide d'un élément de commande (52) capable de régler le déplacement vers l'avant ou vers l'arrière de l' , le corps principal du véhicule (1) étant réglé sur une position de marche arrière.

10. La machine de travail (10) selon la revendication 1, dans laquelle
la section de commande (26, 126, 226) est configurée pour activer le freinage automatique lorsque l'objet (S) est détecté à l'arrière du corps principal du véhicule (1) par la section de détection arrière (71) et lorsque l'inclinaison du corps principal du véhicule (1) est inférieure à une valeur seuil prédéterminée, et
pour supprimer le freinage automatique ou arrêter le freinage automatique lorsque l'objet (S) est détecté à l'arrière du corps principal du véhicule (1) par la section de détection arrière (71) et lorsque l'inclinaison du corps principal du véhicule (1) est égale ou supérieure à une valeur seuil prédéterminée, dans laquelle, de préférence, la valeur seuil prédéterminée de l'inclinaison est de 15 °.

11. La machine de travail (10) selon l'une quelconque des revendications 1 à 6, 8, 9 ou 10, dans laquelle
la machine de travail (10) est une chargeuse sur pneus, et
la machine de travail (10) comprend,
un châssis principal (2),
une flèche (14) fixée de manière pivotante sur une partie avant du châssis principal (2),
un godet (15) relié à la flèche (14) de telle sorte qu'une ouverture (15b) soit disposée vers l'avant, le godet (15) entraînant la flèche (14),
un actionneur (17) configuré pour entraîner le godet (15), et
un sous-lien (18) fixé à la flèche (14), le sous-lien (18) transmettant la force d'entraînement de l'actionneur (17) au godet (15).
